# EUROPEAN PATENT APPLICATION

(11) **EP 4 635 923 A1**
(43) Date of publication of application: **22.10.2025**
(21) Application number: 23903561.1
(22) Date of filing: 14.12.2023
(51) Int. Cl.: C03C 27/12, B32B 17/10, B32B 27/18, B32B 27/20, C08K 5/3492, C08K 5/541, C08L 23/26, C08L 101/00

(54) **RESIN COMPOSITION FOR LAMINATED GLASS INTERLAYER FILM, LAMINATED GLASS INTERLAYER FILM, AND LAMINATED GLASS**

(30) Priority: 15.12.2022 JP 2022200134
(71) Applicant: Dow-Mitsui Polychemicals Co., Ltd., Tokyo 104-0028 (JP)
(72) Inventor: SHIMIZU Takahiro, Ichihara-shi, Chiba 299-0108 (JP); OOGI Kazuyuki, Ichihara-shi, Chiba 299-0108 (JP); YAMAMOTO Sadaki, Ichihara-shi, Chiba 299-0108 (JP); ISOKAWA Motoaki, Ichihara-shi, Chiba 299-0108 (JP); NISHIMOTO Taizo, Sodegaura-shi, Chiba 299-0265 (JP)
(74) Representative: Gulde & Partner
(86) International application number: PCT/JP2023/044798
(87) International publication number: WO 2024/128277

(57) **Abstract**

A resin composition for a laminated glass interlayer film including a resin (A), a coloring agent (B), and an ultraviolet absorber (C), in which the resin composition has, in a total light transmittance of laminated glass formed from the resin composition, a transmission spectrum in which a light transmittance at a wavelength of 400 nm is 65% or less, a wavelength at which the light transmittance is minimized in a wavelength range of 420 nm or more and 720 nm or less is 570 nm or more and 605 nm or less, and a light transmittance at a wavelength at which the light transmittance is minimized in a wavelength range of 570 nm or more and 605 nm or less is 1% or more and 50% or less.

## Description

### TECHNICAL FIELD

The present invention relates to a resin composition for a laminated glass interlayer film, a laminated glass interlayer film, and a laminated glass.

### BACKGROUND ART

In recent years, there has been a demand for improvement in the use value by coloring glass to improve visibility. In particular, in a case where glass is used as a building material, it is expected that the designability of the entire building is improved by coloring the glass to improve visibility.

Examples of the method of coloring glass include a method of attaching a colored film to glass. For example, Patent Document 1 describes an optical structure including a first layer that suppresses ultraviolet rays, and a second layer that has a transmission spectrum in which a wavelength at which a transmittance is minimized is 570 nm or more and 605 nm or less, in which the first layer is arranged at a position closer to a light source than the second layer.

In addition, as another method of coloring glass, in a case where the glass is laminated glass, a method of coloring a laminated glass interlayer film may be used.

In order to color the laminated glass interlayer film, it is common to contain a colorant or a coloring agent in a resin composition for a laminated glass interlayer film.

Patent Document 2 discloses an interlayer film for a heat ray shielding laminated glass composed of a laminate including a heat ray shielding layer containing a tungsten oxide and/or a composite tungsten oxide, and an adhesive resin layer, in which the adhesive resin layer and/or another layer constituting the laminate contains a colorant, and a total light transmittance (JIS K 7105 (1981)) is 40% or more. According to the interlayer film for glass, it is described that the color tone of the laminated glass can be adjusted according to the requirement such as design or the like, and a relatively high visible light transmittance can be maintained to impart high heat ray shielding properties without significantly affecting the color tone.

Patent Document 3 describes an interlayer film for a laminated glass including an organic coloring agent containing a transition element, a metal element different from the transition element, a thermoplastic resin, and a plasticizer. According to the interlayer film for laminated glass, it is described that the visible light transmittance and the heat resistance of the laminated glass can be increased.

Patent Document 4 discloses a colored polyvinyl butyral interlayer film for laminated glass formed by adding a colorant composition containing a pigment and a plasticizer for polyvinyl butyral to plasticized polyvinyl butyral, in which the plasticizer for polyvinyl butyral in the colorant composition is formed from dicarboxylic acid esters, polyether esters, or a mixture thereof, the pigment is formed from pigment particles having an average particle diameter of 2.5 µm or less and a 99% by mass cumulative maximum particle diameter of 5.0 µm or less, and an apparent pH of the colorant composition is in a range of 4 to 10. This makes it possible to provide a colored polyvinyl butyral interlayer film for laminated glass in which the pigment is satisfactorily dispersed.

On the other hand, in recent years, tetraazaporphyrin has attracted attention as a coloring agent. Patent Document 5 describes a tetraazaporphyrin derivative. Tetraazaporphyrin has a structure in which a macrocyclic compound in which four pyrrole rings are alternately bonded to four methine groups at the α-position, and the methine groups of porphyrin which is a derivative thereof are substituted with imine groups. Since tetraazaporphyrin can be coordinated with a metal at the center and has a large π-electron conjugated system, tetraazaporphyrin can be used as an electron carrier and has a sharp absorption peak in a specific wavelength range. Due to that, attempts have been made to apply tetraazaporphyrin to various applications such as electronic materials, optical materials, medical materials, and display materials.

There has also been a study on the application of tetraazaporphyrin to a laminated glass interlayer film, and for example, Patent Document 6 describes a laminated glass interlayer film containing a tetraazaporphyrin compound. Therefore, it is described that this makes it easier to realize laminated glass with effectively improved antiglare properties than before, and the laminated glass with effectively improved antiglare properties can be applied to a wider range of applications.

### RELATED DOCUMENT

### PATENT DOCUMENT

Patent Document 1: International Publication No. WO2022/024806
Patent Document 2: Japanese Unexamined Patent Publication No. 2012-218972
Patent Document 3: International Publication No. WO2014/200108
Patent document 4: Japanese Unexamined Patent Publication No. H2-272068
Patent Document 5: Japanese Unexamined Patent Publication No. 2013-095675
Patent Document 6: Japanese Unexamined Patent Publication No. 2010-138028

### SUMMARY OF THE INVENTION

### TECHNICAL PROBLEM

In the method of attaching a colored film to glass, in a case where the colored film is deteriorated, the colored film can be easily replaced, and thus the colored film is not required to have long-term weather fastness for several years to several tens of years. On the other hand, in the laminated glass interlayer film, since the laminated glass interlayer film cannot be easily replaced in a case where the laminated glass interlayer film is deteriorated, the laminated glass is required to have high weather fastness.

The present inventors have found that there is room for improvement in the weather fastness of the resin composition for a laminated glass interlayer film containing a coloring agent. In particular, the present inventors have found that in the resin composition for a laminated glass interlayer film containing a coloring agent, the weather fastness is not sufficient in applications for long-term use, such as building materials.

The present invention has been made in view of the above circumstances, and provides a resin composition for a laminated glass interlayer film with improved the weather fastness.

### SOLUTION TO PROBLEM

According to the present invention, a resin composition for a laminated glass interlayer film is provided.

[1] A resin composition for a laminated glass interlayer film including:
   a resin (A);
   a coloring agent (B); and
   an ultraviolet absorber (C),
   in which the resin composition has, in a total light transmittance of laminated glass formed from the resin composition, which is measured by the following (method),
   a transmission spectrum in which a light transmittance at a wavelength of 400 nm is 65% or less,
   a wavelength at which the light transmittance is minimized in a wavelength range of 420 nm or more and 720 nm or less is 570 nm or more and 605 nm or less, and
   a light transmittance at a wavelength at which the light transmittance is minimized in a wavelength range of 570 nm or more and 605 nm or less is 1% or more and 50% or less,
   (method)
   a laminated glass interlayer film having a thickness of 1.6 mm and formed from the resin composition is obtained, next, the obtained laminated glass interlayer film is interposed between glass plates having a thickness of 3.2 mm to have a layer configuration of glass plate/laminated glass interlayer film/glass plate, and the laminate is retained in a vacuum at 140°C for 10 minutes using a vacuum laminator, and then pressed at 0.1 MPa (gauge pressure) for 10 minutes to obtain a laminated glass, next, a total light transmittance of the obtained laminated glass is measured with a haze meter in accordance with JIS K 7136: 2000, and a light transmittance at a wavelength of 400 nm and a wavelength at which the light transmittance is minimized in a wavelength range of 420 nm or more and 720 nm or less are read.
[2] The resin composition according to [1],
   in which the light transmittance at a wavelength of 400 nm is 1% or more.
[3] The resin composition according to [1] or [2],
   in which the coloring agent (B) has a maximum absorption wavelength in a wavelength range of 570 nm or more and 605 nm or less.
[4] The resin composition according to any one of [1] to [3],
   in which the coloring agent (B) includes at least one selected from the group consisting of a tetraazaporphyrin compound and an azo compound.
[5] The resin composition according to any one of [1] to [4],
   in which the coloring agent (B) includes a tetraazaporphyrin compound.
[6] The resin composition according to any one of [1] to [5],
   in which a content of the coloring agent (B) is 1 ppm or more and 500 ppm or less with respect to a total amount of the resin composition.
[7] The resin composition according to any one of [1] to [6],
   in which the ultraviolet absorber (C) has a maximum absorption wavelength in a wavelength range of 300 nm or more and 400 nm or less.
[8] The resin composition according to any one of [1] to [7],
   in which the ultraviolet absorber (C) includes an ultraviolet absorber (C1) having a triazine skeleton.
[9] The resin composition according to [8],
   in which a content of the ultraviolet absorber (C1) having a triazine skeleton is 0.01% by mass or more and 2.0% by mass or less when a total amount of the resin composition is 100% by mass.
[10] The resin composition according to any one of [1] to [9],
   in which a content of the ultraviolet absorber (C) is 0.01% by mass or more and 5.0% by mass or less when a total amount of the resin composition is 100% by mass.
[11] The resin composition according to any one of [1] to [10], further including:
   a silane coupling agent (F).
[12] The resin composition according to any one of [1] to [11],
   in which the resin (A) includes at least one selected from the group consisting of an ethylene-vinyl ester copolymer, an ethylene-α-olefin copolymer, an ethylene-unsaturated carboxylic acid-based copolymer, an ionomer of an ethylene-unsaturated carboxylic acid-based copolymer, an ethylene-unsaturated carboxylic acid ester copolymer, polyvinyl butyral, a thermoplastic polyurethane, and a silicone resin.
[13] The resin composition according to any one of [1] to [12],
   in which the resin (A) includes an ionomer of an ethylene-unsaturated carboxylic acid-based copolymer.
[14] The resin composition according to [13],
   in which a metal ion constituting the ionomer of the ethylene-unsaturated carboxylic acid-based copolymer includes one or two or more selected from the group consisting of a sodium ion, a magnesium ion, and a zinc ion.
[15] The resin composition according to any one of [1] to [14],
   in which a total content of the resin (A), the coloring agent (B), and the ultraviolet absorber (C) is 50% by mass or more and 100% by mass or less when a total amount of the resin composition is 100% by mass.
[16] A laminated glass interlayer film including:
   a layer formed from the resin composition according to any one of [1] to [15].
[17] The laminated glass interlayer film according to [16],
   in which the laminated glass interlayer film has a multilayer structure including at least one layer formed from the resin composition.
[18] A laminated glass including:
   the laminated glass interlayer film according to [16] or [17]; and
   a transparent plate-like member that is provided on at least one surface of the laminated glass interlayer film.

### ADVANTAGEOUS EFFECTS OF INVENTION

According to the present invention, it is possible to provide a resin composition for a laminated glass interlayer film with improved the weather fastness.

### BRIEF DESCRIPTION OF THE DRAWING

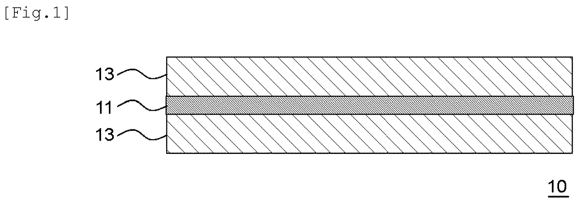

[FIG. 1] A cross-sectional view schematically illustrating an example of a structure of a laminated glass according to an embodiment of the present invention.

### DESCRIPTION OF EMBODIMENTS

In the present specification, a numerical range indicated using "to" indicates a range including the numerical values described before and after "to" as a minimum value and a maximum value, respectively.

In the numerical ranges described in a stepwise manner in the present specification, the upper limit value or the lower limit value described in one numerical range may be replaced with the upper limit value or the lower limit value of another numerical range described in a stepwise manner, or may be replaced with the values shown in Examples.

In the present specification, each component may include plural substances corresponding thereto and plural substances corresponding to each component may be used. In a case where plural substances corresponding to each component are present in the resin composition, the content or the amount of each component means the total content or the total amount of the plural substances present in the resin composition unless otherwise specified. In addition, in a case where plural substances corresponding to each component are used, the amount of each component used means the total of the plural substances used unless otherwise specified.

In the present specification, the concept of "(meth)acrylic acid" includes both acrylic acid and methacrylic acid, and the concept of "(meth)acrylic acid ester" includes both acrylic acid ester and methacrylic acid ester.

### 1. Resin Composition

A resin composition according to the present embodiment is a resin composition for a laminated glass interlayer film including a resin (A), a coloring agent (B), and an ultraviolet absorber (C), and the resin composition has, in a total light transmittance of laminated glass formed from the resin composition, a transmission spectrum in which a light transmittance at a wavelength of 400 nm is 65% or less, a wavelength at which the light transmittance is minimized in a wavelength range of 420 nm or more and 720 nm or less is 570 nm or more and 605 nm or less, and a light transmittance at a wavelength at which the light transmittance is minimized in a wavelength range of 570 nm or more and 605 nm or less is 1% or more and 50% or less.

The total light transmittance of the laminated glass is measured as follows.

A laminated glass interlayer film having a thickness of 1.6 mm and formed from the resin composition is obtained. Next, the obtained laminated glass interlayer film is interposed between glass plates having a thickness of 3.2 mm to have a layer structure of the glass plate/laminated glass interlayer film/glass plate, and the laminate is retained in a vacuum at 140°C for 10 minutes using a vacuum laminator, and then pressed at 0.1 MPa (gauge pressure) for 10 minutes to obtain a laminated glass. Next, the total light transmittance of the obtained laminated glass is measured with a haze meter in accordance with JIS K 7136: 2000. A light transmittance at a wavelength of 400 nm and a wavelength at which the light transmittance is minimized in a wavelength range of 420 nm or more and 720 nm or less are read.

According to the study by the present inventors, it has been found that, by containing a coloring agent and an ultraviolet absorber in the laminated glass interlayer film, visibility can be improved while maintaining transparency. However, it has been found that in a case where the laminated glass interlayer film contains a coloring agent and an ultraviolet absorber, the weather fastness is not sufficient. In particular, it has been found that the weather fastness is not sufficient in applications for long-term use, such as building materials.

Therefore, as a result of further studies by the present inventors, it has been found that, in a case where the laminated glass interlayer film includes the coloring agent and the ultraviolet absorber and the resin composition has a transmission spectrum in which the light transmittance at a wavelength of 400 nm is 65% or less, the wavelength at which the light transmittance is minimized in a wavelength range of 420 nm or more and 720 nm or less is 570 nm or more and 605 nm or less, and the light transmittance at the wavelength at which the light transmittance is minimized in a wavelength range of 570 nm or more and 605 nm or less is 1% or more and 50% or less, it is possible to further improve weather fastness while maintaining a performance balance of transparency and visibility.

Although the reason for this is not clear, it is considered that, since the light transmittance at a wavelength of 400 nm is 65% or less, and the light transmittance at the wavelength at which the light transmittance is minimized in a wavelength range of 570 nm or more and 605 nm or less is 1% or more and 50% or less, the deterioration of the resin or the coloring agent due to ultraviolet rays is suppressed to improve the weather fastness, and since the resin composition has a transmission spectrum in which the wavelength at which the light transmittance is minimized in a wavelength range of 420 nm or more and 720 nm or less is a wavelength of 570 nm or more and 605 nm or less, the visibility can be improved.

In this manner, it is possible to obtain a laminated glass interlayer film and a laminated glass having excellent performance balance of transparency and visibility and improved weather fastness.

In the resin composition according to the present embodiment, the light transmittance at a wavelength of 400 nm is 65% or less. The light transmittance at a wavelength of 400 nm is preferably 63% or less, more preferably 60% or less, still more preferably 55% or less, even more preferably 50% or less, yet still more preferably 45% or less, yet even more preferably 40% or less, and even still more preferably 35% or less. From the viewpoint of preventing the laminated glass interlayer film from becoming excessively yellowed and improving the appearance, the light transmittance at a wavelength of 400 nm is preferably 1% or more, more preferably 1.5% or more, still more preferably 2.0% or more, and even still more preferably 2.3% or more.

It is preferable that the light transmittance at a wavelength of 400 nm is included in the above range before and after the laminated glass using the laminated glass interlayer film formed from the resin composition according to the present embodiment is irradiated with ultraviolet rays. In this manner, the weather fastness of the laminated glass can be further improved, and the appearance of the laminated glass can be maintained even after the laminated glass is irradiated with ultraviolet rays.

The light transmittance (T₁) at a wavelength of 400 nm, which is measured after the laminated glass using the laminated glass interlayer film formed from the resin composition of the present embodiment is irradiated with ultraviolet rays for 1000 hours, is 65%, preferably 63% or less, more preferably 60% or less, still more preferably 55% or less, yet still more preferably 50% or less, even more preferably 45% or less, yet even more preferably 40% or less, and still even more preferably 35% or less, and from the viewpoint of preventing excessive yellowing of the laminated glass interlayer film and further improving the appearance, the light transmittance is preferably 1% or more, more preferably 1.5% or more, even more preferably 2.0% or more, and still more preferably 2.3% or more.

In addition, from the viewpoint of further improving the weather fastness, the absolute value |T₁ - T₀| of the change rate of the light transmittance (T₁) after ultraviolet irradiation for 1000 hours to the light transmittance (T₀) before ultraviolet irradiation at a wavelength of 400 nm is preferably 6.0% or less, more preferably 5.0% or less, and still more preferably 4.5% or less. The lower limit of the absolute value |T₁ - T₀| of the change rate of the light transmittance (T₁) after ultraviolet irradiation for 1000 hours to the light transmittance (T₀) before ultraviolet irradiation at a wavelength of 400 nm is not limited, but is, for example, 0% or more, and may be 0.1% or more.

In the resin composition of the present embodiment, from the viewpoint of improving the appearance of the laminated glass, the light transmittance at a wavelength at which the light transmittance is minimized in a wavelength range of 570 nm or more and 605 nm or less is 50% or less, and preferably 45% or less, and is 1% or more, preferably 5% or more, more preferably 10% or more, and still more preferably 13% or more.

The light transmittance at the wavelength at which the light transmittance is minimized in the wavelength range of 570 nm or more and 605 nm or less is preferably included in the above-described range before and after the laminated glass using the laminated glass interlayer film formed from the resin composition according to the present embodiment is irradiated with ultraviolet rays. In this manner, the weather fastness of the laminated glass can be further improved, and the change in color tone can be reduced.

From the viewpoint of further improving the appearance of the laminated glass, the light transmittance (T₁) at the wavelength at which the light transmittance is minimized in a wavelength range of 570 nm or more and 605 nm or less, which is measured after the laminated glass using the laminated glass interlayer film formed from the resin composition according to the present embodiment for 1000 hours, is 50% or less, preferably 45% or less, and more preferably 42% or less, and is 1% or more, preferably 5% or more, more preferably 10% or more, still preferably 13% or more, even more preferably 15% or more, and yet still more preferably 20% or more, and even more preferably 25% or more.

In addition, the absolute value |T₁ - T₀| of the change rate of the light transmittance (T₁) after ultraviolet irradiation for 1000 hours to the light transmittance (T₀) before ultraviolet irradiation at the wavelength at which the light transmittance is minimized in a wavelength range of 570 nm or more and 605 nm or less is preferably 25.0% or less, more preferably 24.0% or less, and still more preferably 23.5% or less from the viewpoint of further improving the weather fastness. The lower limit of the absolute value |T₁ - T₀| of the change rate of the light transmittance (T₁) after ultraviolet irradiation for 1000 hours to the light transmittance (T₀) before ultraviolet irradiation is not limited at the wavelength at which the light transmittance is minimized in a wavelength range of 570 nm or more and 605 nm or less, and is, for example, 0% or more, and may be 5.0% or more or 8.0% or more.

In the resin composition according to the present embodiment, from the viewpoint of suppressing the laminated glass from developing a bluish tint and improving the appearance, the light transmittance at a wavelength of 500 nm is preferably 70% or more, more preferably 75% or more, still more preferably 79% or more, and even still more preferably 80% or more.

The upper limit of the light transmittance at a wavelength of 500 nm is not particularly limited, and is, for example, less than 100%, and may be 95% or less or 90% or less.

It is preferable that the light transmittance at a wavelength of 500 nm is included in the above-described range before and after the laminated glass using the laminated glass interlayer film formed from the resin composition of the present embodiment is irradiated with ultraviolet rays. In this manner, the weather fastness of the laminated glass can be further improved.

From the viewpoint of suppressing the laminated glass from developing a bluish tint and improving the appearance, the light transmittance (T₁) at a wavelength of 500 nm, which is measured after the laminated glass using the laminated glass interlayer film formed from the resin composition according to the present embodiment is irradiated with ultraviolet rays for 1000 hours, is preferably 70% or more, more preferably 75% or more, still more preferably 79% or more, and even still more preferably 80% or more. There is no restriction on the upper limit of the light transmittance (T₁) at a wavelength of 500 nm, which is measured after the laminated glass is irradiated with ultraviolet rays for 1000 hours, but for example, it may be less than 100%, and may be 95% or less or 90% or less.

In addition, from the viewpoint of further improving the weather fastness, the absolute value |T₁ - T₀| of the change rate of the light transmittance (T₁) after ultraviolet irradiation for 1000 hours to the light transmittance (T₀) before ultraviolet irradiation at a wavelength of 500 nm is preferably 6.0% or less, more preferably 5.5% or less, and still more preferably 5.0% or less. The lower limit of the absolute value |T₁ - T₀| of the change rate of the light transmittance (T₁) after ultraviolet irradiation for 1000 hours to the light transmittance (T₀) before ultraviolet irradiation at a wavelength of 500 nm is not limited, and is, for example, 0% or more, and may be 0.1% or more.

In the resin composition according to the present embodiment, from the viewpoint of suppressing the laminated glass from developing a reddish tint and improving the appearance, the light transmittance at a wavelength of 700 nm is preferably 70% or more, more preferably 75% or more, still more preferably 80% or more, and even still more preferably 83% or more.

Although the upper limit of the light transmittance at a wavelength of 700 nm is not particularly limited, the upper limit is, for example, less than 100%, and may be 95% or less or 90% or less.

It is preferable that the light transmittance at a wavelength of 700 nm is included in the above-described range before and after the laminated glass using the laminated glass interlayer film formed from the resin composition of the present embodiment is irradiated with ultraviolet rays. In this manner, the weather fastness of the laminated glass can be further improved.

From the viewpoint of suppressing the laminated glass from developing a reddish tint and improving the appearance, the light transmittance (T₁) at a wavelength of 700 nm, which is measured after the laminated glass using the laminated glass interlayer film formed from the resin composition according to the present embodiment is irradiated with ultraviolet rays for 1000 hours, is preferably 70% or more, more preferably 75% or more, still more preferably 80% or more, and even still more preferably 83% or more. There is no restriction on the upper limit of the light transmittance (T₁) at a wavelength of 700 nm, which is measured after the laminated glass is irradiated with ultraviolet rays for 1000 hours, but for example, it may be less than 100%, and may be 95% or less or 90% or less.

In addition, from the viewpoint of further improving the weather fastness, the absolute value |T₁ - T₀| of the change rate of the light transmittance (T₁) after ultraviolet irradiation for 1000 hours to the light transmittance (T₀) before ultraviolet irradiation at a wavelength of 700 nm is preferably 6.0% or less, more preferably 5.5% or less, and still more preferably 5.0% or less. The lower limit of the absolute value |T₁ - T₀| of the change rate of the light transmittance (T₁) after ultraviolet irradiation for 1000 hours to the light transmittance (T₀) before ultraviolet irradiation at a wavelength of 700 nm is not limited, and is, for example, 0% or more, and may be 0.1% or more or 0.3% or more.

The light transmittance is measured as follows.

A laminated glass interlayer film having a thickness of 1.6 mm and formed from the resin composition according to the present embodiment is obtained. Next, the obtained laminated glass interlayer film is interposed between glass plates having a thickness of 3.2 mm to have a layer structure of the glass plate/laminated glass interlayer film/glass plate, and the laminate is retained in a vacuum at 140°C for 10 minutes using a vacuum laminator, and then pressed at 0.1 MPa (gauge pressure) for 10 minutes to obtain a laminated glass.

Next, the total light transmittance of the obtained laminated glass is measured with a haze meter in accordance with JIS K 7136: 2000. A light transmittance at a wavelength of 400 nm and a wavelength at which the light transmittance is minimized in a wavelength range of 420 nm or more and 720 nm or less are read.

In addition, the ultraviolet irradiation can be performed by irradiating the laminated glass using the laminated glass interlayer film formed from the resin composition according to the present embodiment with ultraviolet rays using an ultraviolet irradiation device (Ci4000 type light source: xenon arc lamp) under the conditions: 180 W/m² (3 Sun), exposure time: 0 to 1000 hours, and black standard temperature: 63°C. The ultraviolet irradiation is performed after the laminated glass is obtained and before the total light transmittance of the obtained laminated glass is measured.

The resin composition according to the present embodiment has a transmission spectrum in which the wavelength at which the light transmittance is minimized in a wavelength range of 420 nm or more and 720 nm or less is 570 nm or more and 605 nm or less. As a result, regarding the view through the laminated glass, the visibility can be improved by clarifying the contrast between red and green while maintaining the brightness.

The wavelength at which the light transmittance is minimized in a wavelength range of 420 nm or more and 720 nm or less is preferably 575 nm or more and more preferably 580 nm or more, and is preferably 600 nm or less, more preferably 595 nm or less, and still more preferably 590 nm or less.

It is preferable that the wavelength at which the light transmittance is minimized in a wavelength range of 420 nm or more and 720 nm or less is included in the above-described range before and after the laminated glass using the laminated glass interlayer film formed from the resin composition according to the present embodiment is irradiated with ultraviolet rays. In this manner, the weather fastness of the laminated glass can be further improved.

The wavelength at which the light transmittance is minimized in a wavelength range of 420 nm or more and 720 nm or less, which is measured after the laminated glass using the laminated glass interlayer film formed from the resin composition according to the present embodiment for 1000 hours, is preferably 575 nm or more, and more preferably 580 nm or more, and is preferably 600 nm or less, more preferably 595 nm or less, and still more preferably 590nm or less.

Hereinafter, each component constituting the resin composition according to the present embodiment will be described.

### <Resin (A)>

From the viewpoint of further improving the performance balance of the flexibility, adhesiveness, mechanical strength, workability, and the like of the obtained laminated glass interlayer film, the resin (A) in the present embodiment preferably includes at least one selected from the group consisting of an ethylene-vinyl ester copolymer, an ethylene-α-olefin copolymer, an ethylene-unsaturated carboxylic acid-based copolymer, an ionomer of an ethylene-unsaturated carboxylic acid-based copolymer, an ethylene-unsaturated carboxylic acid ester copolymer, polyvinyl butyral, thermoplastic polyurethane, and a silicone resin. More preferably, the resin (A) includes an ionomer of an ethylene-unsaturated carboxylic acid-based copolymer.

### (Ethylene-Unsaturated Carboxylic Acid-Based Copolymer and Ionomer of Ethylene-Unsaturated Carboxylic Acid-Based Copolymer)

The ethylene-unsaturated carboxylic acid-based copolymer and the ionomer of the ethylene-unsaturated carboxylic acid-based copolymer will be described.

The ethylene-unsaturated carboxylic acid-based copolymer is typically a polymer obtained by copolymerizing ethylene with at least one unsaturated carboxylic acid. As the ethylene-unsaturated carboxylic acid-based copolymer, a copolymer containing ethylene and an unsaturated carboxylic acid, a copolymer containing ethylene, an unsaturated carboxylic acid, and an unsaturated carboxylic acid ester, and the like can be exemplified.

The copolymer may be any of a block copolymer, a random copolymer, or a graft copolymer, and may be any of a ternary copolymer or a quaternary or higher-order polymer. Among these, a random copolymer is preferable from the viewpoint of industrial availability.

Examples of the unsaturated carboxylic acid include acrylic acid, methacrylic acid, 2-ethylacrylic acid, crotonic acid, maleic acid, fumaric acid, itaconic acid, maleic anhydride, fumaric anhydride, itaconic anhydride, monomethyl maleate, and monoethyl maleate. Among these, from the viewpoint of the performance balance of the productivity, hygiene, and the like of the ethylene-unsaturated carboxylic acid-based copolymer, acrylic acid and/or methacrylic acid is preferable.

The unsaturated carboxylic acid may be used alone or in combination of two or more thereof.

The ethylene-unsaturated carboxylic acid-based copolymer is preferably an ethylene-(meth)acrylic acid-based copolymer and an ethylene-(meth)acrylic acid-(meth) acrylic acid ester copolymer, and more preferably an ethylene-(meth)acrylic acid copolymer.

When the total content of the constitutional units constituting the ethylene-unsaturated carboxylic acid-based copolymer is 100% by mass, the content of the constitutional unit derived from ethylene is preferably 65% by mass or more, more preferably 70% by mass or more, and still more preferably 75% by mass, from the viewpoint of further improving the performance balance of the heat resistance, mechanical strength, water resistance, workability, and the like of the laminated glass interlayer film, and is preferably 95% by mass or less, more preferably 90% by mass or less, and still more preferably 85% by mass or less, from the viewpoint of further improving the performance balance of the transparency, flexibility, adhesiveness, and the like of the laminated glass interlayer film.

When the total content of the constitutional units constituting the ethylene-unsaturated carboxylic acid-based copolymer is 100% by mass, the content of the constitutional unit derived from the unsaturated carboxylic acid is preferably 5% by mass or more, more preferably 10% by mass or more, and still more preferably 15% by mass from the viewpoint of further improving the performance balance of the transparency, flexibility, adhesiveness, and the like of the laminated glass interlayer film, and is preferably 35% by mass or less, more preferably 30% by mass or less, and still more preferably 25% by mass or less from the viewpoint of further improving the performance balance of the heat resistance, mechanical strength, water resistance, workability, and the like of the laminated glass interlayer film.

The ethylene-unsaturated carboxylic acid-based copolymer may contain other copolymerizable monomers in addition to ethylene and the unsaturated carboxylic acid. When the total content of the constitutional units constituting the ethylene-unsaturated carboxylic acid-based copolymer is 100% by mass, the content of the constitutional unit derived from the other copolymerizable monomer is preferably 0% by mass or more, and preferably 30% by mass or less and more preferably 25% by mass or less. Examples of the other copolymerizable monomers include unsaturated esters, for example, vinyl esters such as vinyl acetate and vinyl propionate; unsaturated carboxylic acid esters such as methyl (meth)acrylate, ethyl (meth)acrylate, propyl (meth)acrylate, isobutyl (meth)acrylate, n-butyl (meth)acrylate, and 2-ethylhexyl (meth)acrylate; and the like. A case where a constitutional unit derived from the other copolymerizable monomers is included in an amount in the range described above is preferable from the viewpoint that the flexibility of the laminated glass interlayer film.

The ionomer of the ethylene-unsaturated carboxylic acid-based copolymer is a resin in which at least a part of carboxy groups in the above-described ethylene-unsaturated carboxylic acid-based copolymer is neutralized with metal ions. Hereinafter, the ionomer of the ethylene-unsaturated carboxylic acid-based copolymer may also be simply referred to as "ionomer".

In addition, an ethylene-unsaturated carboxylic acid-based copolymer containing an unsaturated carboxylic acid such as acrylic acid or methacrylic acid as a constitutional unit can be added to one or two or more ionomers of an ethylene-unsaturated carboxylic acid-based copolymer to produce an ionomer.

Examples of the metal ions that constitute the ionomer include one or two or more selected from the group consisting of a lithium ion, a potassium ion, a sodium ion, a silver ion, a copper ion, a calcium ion, a magnesium ion, a zinc ion, an aluminum ion, a barium ion, a beryllium ion, a cesium ion, a beryllium ion, a strontium ion, a manganese ion, a tin ion, a lead ion, an iron ion, a cobalt ion, and a nickel ion.

From the viewpoint of further improving the performance balance of the optical characteristics, adhesiveness, and water resistance of the obtained laminated glass interlayer film, the metal ion constituting the ionomer preferably includes one or two or more selected from the group consisting of a sodium ion, a magnesium ion, and a zinc ion, and more preferably includes a magnesium ion.

The metal ions may be used alone or in combination of two or more thereof.

From the viewpoint of further improving the performance balance of the mechanical strength and the divisibility of the laminated glass interlayer film, the degree of neutralization of the ethylene-unsaturated carboxylic acid-based copolymer in the ionomer (hereinafter, referred to as "degree of neutralization of the ionomer") is preferably 5% or more, more preferably 10% or more, still more preferably 20% or more, even more preferably 30% or more, and even still more preferably 40% or more, and is preferably 100% or less, more preferably 95% or less, still more preferably 90% or less, yet still more preferably 80% or less, even more preferably 70% or less, yet even more preferably 60% or less, and even still more preferably 50% or less.

The degree of neutralization of the ionomer is a ratio (% by mole) of carboxyl groups neutralized by metal ions with respect to the number of moles of all carboxyl groups contained in the ethylene-unsaturated carboxylic acid-based copolymer.

From the viewpoint of further improving the performance balance of the formability and the processing stability of the laminated glass interlayer film, the melt mass flow rate (MFR) of the ethylene-unsaturated carboxylic acid-based copolymer and the ionomer of the ethylene-unsaturated carboxylic acid-based copolymer, which is measured under the conditions of a temperature of 190°C and a load of 2160 g in accordance with JIS K 7210-1: 2014, is preferably 0.01 g/10 min or more, more preferably 0.1 g/10 min or more, still more preferably 0.5 g/10 min or more, even more preferably 1.0 g/10 min or more, and even still more preferably 2.0 g/10 min or more, and from the viewpoint of further improving the performance balance of the heat resistance, the mechanical strength, and the like of the laminated glass interlayer film, the melt mass flow rate is preferably 20.0 g/10 min or less, preferably 10.0 g/10 min or less, and preferably 5.0 g/10 min or less.

### (Ethylene-Vinyl Ester Copolymer)

The ethylene-vinyl ester copolymer is not limited as long as it is a copolymer including a constitutional unit derived from ethylene and a constitutional unit derived from vinyl ester.

The ethylene-vinyl ester copolymer may be used alone or in combination of two or more thereof.

Examples of the ethylene-vinyl ester copolymer include an ethylene-vinyl acetate copolymer, an ethylene-vinyl propionate copolymer, an ethylene-vinyl butyrate copolymer, and an ethylene-vinyl stearate copolymer. Among these, an ethylene-vinyl acetate copolymer is preferable.

The ethylene-vinyl ester copolymer may be a copolymer consisting of only a constitutional unit derived from ethylene and a constitutional unit derived from a vinyl ester, or may be a copolymer including a constitutional unit derived from a monomer other than ethylene and vinyl ester (however, those included in the above-described ethylene-unsaturated carboxylic acid-based copolymer are excluded).

Examples of monomers other than ethylene and vinyl ester include unsaturated hydrocarbons such as propylene, butene, 1,3-butadiene, pentene, 1,3-pentadiene, and 1-hexene, oxides such as vinyl sulfate and vinyl nitrate, halogen compounds such as vinyl chloride and vinyl fluoride, primary and secondary amine compounds containing a vinyl group, carbon monoxide, and sulfur dioxide.

### (Ethylene-Unsaturated Carboxylic Acid Ester Copolymer)

The ethylene-unsaturated carboxylic acid ester copolymer is a polymer obtained by copolymerizing ethylene and at least one unsaturated carboxylic acid ester (however, those included in the above-described ethylene-unsaturated carboxylic acid-based copolymer are excluded).

Specific examples of the ethylene-unsaturated carboxylic acid ester copolymer include a copolymer including ethylene and an unsaturated carboxylic acid alkyl ester.

Examples of the unsaturated carboxylic acid in the unsaturated carboxylic acid ester include acrylic acid, methacrylic acid, 2-ethylacrylic acid, crotonic acid, maleic acid, fumaric acid, itaconic acid, maleic anhydride, fumaric anhydride, itaconic anhydride, monomethyl maleate, and monoethyl maleate.

Among these, from the viewpoint of improving the performance balance of the productivity and the hygiene of the ethylene-unsaturated carboxylic acid ester copolymer, the unsaturated carboxylic acid preferably includes at least one selected from acrylic acid and methacrylic acid. These unsaturated carboxylic acids may be used alone or in combination of two or more thereof.

The number of carbon atoms in the alkyl moiety in the unsaturated carboxylic acid alkyl ester is preferably 1 to 12 and more preferably 1 to 8.

More specifically, examples thereof include alkyl groups such as methyl, ethyl, n-propyl, isopropyl, n-butyl, isobutyl, secondary butyl, 2-ethylhexyl, and isooctyl.

The unsaturated carboxylic acid ester preferably contains one or more selected from (meth)acrylic acid esters such as methyl (meth)acrylate, ethyl (meth)acrylate, isopropyl (meth)acrylate, n-propyl (meth)acrylate, isobutyl (meth)acrylate, n-butyl (meth)acrylate, isooctyl (meth)acrylate, and 2-ethylhexyl (meth)acrylate. These unsaturated carboxylic acid esters may be used alone or in combination of two or more thereof. Among these, one or two or more selected from methyl (meth)acrylate, ethyl (meth)acrylate, isopropyl (meth)acrylate, n-propyl (meth)acrylate, isobutyl (meth)acrylate, and n-butyl (meth)acrylate are more preferable.

The ethylene-unsaturated carboxylic acid ester copolymer is preferably an ethylene-(meth)acrylic acid ester copolymer. Among these, a copolymer consisting of ethylene and one (meth)acrylic acid ester is preferable. Examples of the copolymer include one or two or more selected from the group consisting of an ethylene-methyl (meth)acrylate copolymer, an ethylene-ethyl (meth)acrylate copolymer, an ethylene-isopropyl (meth)acrylate copolymer, an ethylene-n-propyl (meth)acrylate copolymer, an ethylene-isobutyl (meth)acrylate copolymer, an ethylene-n-butyl (meth)acrylate copolymer, an ethylene-isooctyl (meth)acrylate copolymer, and an ethylene-2-ethylhexyl (meth)acrylate copolymer. The ethylene-unsaturated carboxylic acid ester copolymer is preferably an ethylene-methyl (meth)acrylate copolymer.

### (Ethylene-α-Olefin Copolymer)

The ethylene-α-olefin copolymer is a copolymer of ethylene and an α-olefin. The ethylene-α-olefin copolymer may contain only one α-olefin, or may contain two or more α-olefins. The α-olefin includes one or two or more selected from the group consisting of propylene, 1-butene, 1-pentene, 1-hexene, 3-methyl-1-butene, 3,3-dimethyl-1-butene, 3-methyl-1-pentene, 4-methyl-1-pentene, 1-octene, 1-decene, and 1-dodecene. From the viewpoint of easy availability, one or two or more selected from the group consisting of propylene, 1-butene, 1-pentene, 1-hexene, 4-methyl-1-pentene, and 1-octene are preferable. The ethylene-α-olefin copolymer may be a random copolymer or a block copolymer, and a random copolymer is preferable.

### (Polyvinyl Butyral)

Polyvinyl butyral is a polymer having a constitutional unit having a vinyl butyral group in the molecule.

Polyvinyl butyral is obtained through acetalization by reacting polyvinyl alcohol with butyraldehyde. In a case of acetalizing polyvinyl alcohol (PVA), it is difficult to completely acetalize PVA, and hydroxyl groups partially irreversibly remain. Therefore, polyvinyl butyral contains hydroxyl groups.

In addition, polyvinyl alcohol is usually produced by saponifying polyvinyl acetate, but a small amount of acetyl groups often remain during the saponification in the production process of polyvinyl alcohol. Thus, generally, in the polyvinyl butyral resin, the acetyl groups or hydroxyl groups remain partially irreversibly. Therefore, the polyvinyl butyral resin usually contains an acetyl group, and a polymer having a constitutional unit having a vinyl butyral group, a constitutional unit having an acetyl group, and a constitutional unit having a hydroxyl group is preferable.

When the total amount of the polyvinyl butyral is 100 % by mole, the hydroxyl group content of the polyvinyl butyral is preferably 1 % by mole or more, more preferably 5 % by mole or more, still more preferably 10 % by mole or more, even more preferably 15 % by mole or more, and even still more preferably 20 % by mole or more, and is preferably 50 % by mole or less, more preferably 45 % by mole or less, still more preferably 40 % by mole or less, even more preferably 35 % by mole or less, yet still more preferably 30 % by mole or less, and even still more preferably 25 % by mole or less.

The hydroxyl group content of the polyvinyl butyral is a value in which a molar fraction obtained by dividing the amount of ethylene groups to which the hydroxyl group is bonded by the total amount of ethylene groups in the main chain is expressed as a percentage. The amount of ethylene groups to which the hydroxyl group is bonded can be measured, for example, in accordance with JIS K 6728 "Test method for polyvinyl butyral".

When the total amount of the polyvinyl butyral is 100% by mass, the degree of acetalization of the polyvinyl butyral is preferably 55% by mass or more, more preferably 60% by mass or more, still more preferably 65% by mass or more, even more preferably 70% by mass or more, and even still more preferably 75% by mass or more, and is preferably 95% by mass or less, more preferably 90% by mass or less, still more preferably 85% by mass or less, and even still more preferably 80% by mass or less.

The degree of acetalization of the polyvinyl butyral is a value in which a molar fraction obtained by dividing a value obtained by subtracting the amount of ethylene groups to which a hydroxyl group is bonded and the amount of ethylene groups to which an acetyl group is bonded from the total amount of ethylene groups in the main chain by the total amount of ethylene groups in the main chain, by the total amount of ethylene groups in the main chain, is expressed as a percentage. The degree of acetalization can be calculated from the results measured by a method in accordance with JIS K 6728 "Test method for polyvinyl butyral".

The glass transition temperature of the polyvinyl butyral determined by DSC is preferably 10°C or higher, more preferably 20°C or higher, still more preferably 30°C or higher, even more preferably 40°C or higher, yet still more preferably 50°C or higher, and even still preferably 60°C or higher, and is preferably 120°C or lower, more preferably 110°C or lower, still more preferably 100°C or lower, even more preferably 90°C or lower, yet still preferably 80°C or lower, and even still more preferably 70°C or lower.

### (Thermoplastic Polyurethane)

The thermoplastic polyurethane resin is not particularly limited, and a known thermoplastic polyurethane resin can be used. Examples thereof include a block copolymer having polyurethane as a hard segment and having a polyester such as polyether, adipate-based polyester, or caprolactone-based polyester, or polycarbonate as a soft segment.

More specifically, examples of the thermoplastic polyurethane resin include resins having thermoplasticity among resins which are formed of a bifunctional polyol, a diisocyanate, and a chain extender and contain a urethane group in a molecular structure.

The thermoplastic polyurethane resin is classified according to the type of raw material such as a bifunctional polyol, and examples thereof include a polyether-based thermoplastic polyurethane resin, a polyester-based thermoplastic polyurethane resin, and a polycarbonate-based thermoplastic polyurethane resin. These thermoplastic polyurethane resins may be used alone or in combination of two or more thereof.

### (Silicone Resin)

The silicone resin is not particularly limited, and for example, compounds containing two or more siloxane bonds (-Si-O-), such as various known or commercially available siloxane-based polymers, can be used.

When the total amount of the resin composition is 100% by mass, the content of the resin (A) in the resin composition according to the present embodiment is preferably 50% by mass or more, more preferably 60% by mass or more, still more preferably 70% by mass or more, even more preferably 80% by mass or more, yet still more preferably 90% by mass or more, and even still more preferably 95% by mass or more, and is preferably less than 100% by mass, more preferably 99.9% by mass or less, and still more preferably 99.7% by mass or less, from the viewpoint of further improving the performance balance of the transparency, weather fastness, optical characteristics, interlayer adhesiveness, and water resistance of the laminated glass.

In a case where the ionomer of the ethylene-unsaturated carboxylic acid-based copolymer is used as the resin (A) in the resin composition according to the present embodiment, when the total amount of the resin composition is 100% by mass, the content of the ionomer of the ethylene-unsaturated carboxylic acid-based copolymer is preferably 50% by mass or more, more preferably 60% by mass or more, still more preferably 70% by mass or more, even more preferably 80% by mass or more, and even still more preferably 90% by mass or more, and is preferably less than 100% by mass, from the viewpoint of further improving the performance balance of the transparency, weather fastness, optical characteristics, interlayer adhesiveness, and water resistance of the laminated glass.

### <Coloring Agent (B)>

The coloring agent (B) may be any of an inorganic dye, an organic dye, or a pigment, and is not limited thereto.

The range of the maximum absorption wavelength of the coloring agent (B) is preferably 570 nm or more, more preferably 575 nm or more, and still more preferably 580 nm or more, and is preferably 605 nm or less, more preferably 600 nm or less, still more preferably 595 nm or less, and even still more preferably 590 nm or less. In a case where the coloring agent (B) has a maximum absorption wavelength in the above-described range, it is possible to improve the performance balance of the transparency and the visibility while improving the appearance of the laminated glass.

The coloring agent (B) preferably includes at least one of a tetraazaporphyrin compound or an azo compound, and more preferably includes a tetraazaporphyrin compound.

The azo compound has an azo skeleton.

The tetraazaporphyrin compound may have various substituents in the tetraazaporphyrin skeleton, and is preferably, for example, a compound represented by General Formula (1).

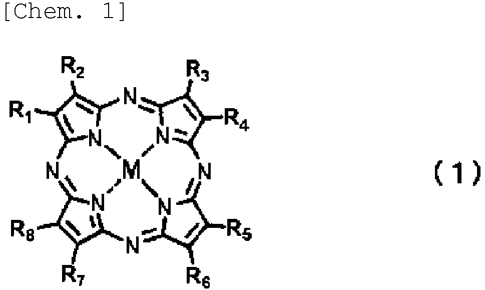

In Formula (1), R₁ to R₈ each independently represent a hydrogen atom, a halogen atom, a cyano group, a nitro group, a linear, branched, or cyclic alkyl group, a linear, branched, or cyclic alkoxy group, a substituted or unsubstituted aryl group, a substituted or unsubstituted aryloxy group, a substituted or unsubstituted aralkyl group, a substituted or unsubstituted aralkyloxy group, a linear, branched, or cyclic halogenoalkyl group, a linear, branched, or cyclic halogenoalkoxy group, a substituted or unsubstituted amino group, a linear, branched, or cyclic alkoxyalkyl group, a linear, branched, or cyclic alkoxyalkoxyalkyl group, a substituted or unsubstituted aryloxyalkyl group, a substituted or unsubstituted aralkyloxyalkyl group, or a linear, branched, or cyclic halogenoalkoxyalkyl group, adjacent groups selected from R₁ to R₈ may be bonded to each other to form a substituted or unsubstituted carbon cyclic aliphatic ring together with the substituted carbon atom, and M represents two hydrogen atoms, two monovalent metal atoms, a divalent metal atom, a trivalent substituted metal atom, a tetravalent substituted metal atom, or an oxidized metal atom.

In the present specification, the aryl group represents, for example, a carbon cyclic aromatic group such as a phenyl group or a naphthyl group, or a heterocyclic aromatic group such as a furyl group, a thienyl group, or a pyridyl group, and preferably represents a carbon cyclic aromatic group.

In the compound represented by General Formula (1), R₁ to R₈ each independently preferably represent one or two or more selected from the group consisting of a hydrogen atom, a halogen atom, a cyano group, a nitro group, a linear, branched, or cyclic alkyl group having 1 to 24 carbon atoms, a linear, branched, or cyclic alkoxy group having 1 to 24 carbon atoms, a substituted or unsubstituted aryl group having 4 to 30 carbon atoms, a substituted or unsubstituted aryloxy group having 4 to 30 carbon atoms, a substituted or unsubstituted aralkyl group having 5 to 30 carbon atoms, a substituted or unsubstituted aralkyloxy group having 5 to 30 carbon atoms, a linear, branched, or cyclic halogenoalkyl group having 1 to 24 carbon atoms, a linear, branched, or cyclic halogenoalkoxy group having 1 to 24 carbon atoms, an amino group, a substituted amino group having 1 to 30 carbon atoms, a linear, branched, or cyclic alkoxyalkyl group having 2 to 24 carbon atoms, a linear, branched, or cyclic alkoxyalkoxyalkyl group having 3 to 24 carbon atoms, a substituted or unsubstituted aryloxyalkyl group having 5 to 30 carbon atoms, a substituted or unsubstituted aralkyloxyalkyl group having 6 to 30 carbon atoms, or a linear, branched, or cyclic halogenoalkoxyalkyl group having 2 to 24 carbon atoms. R₁ to R₈ are more preferably a hydrogen atom or a linear or branched alkyl group having 4 to 8 carbon atoms.

From the viewpoint of further improving the performance balance of the transparency and the visibility of the laminated glass, the content of the coloring agent (B) is preferably 1 ppm or more, more preferably 5 ppm or more, still more preferably 10 ppm or more, and even still more preferably 15 ppm or more, and is preferably 500 ppm or less, more preferably 300 ppm or less, still more preferably 100 ppm or less, even more preferably 80 ppm or less, yet still more preferably 50 ppm or less, and even still more preferably 30 ppm or less with respect to the total amount of the resin composition.

### <Ultraviolet Absorber (C)>

Examples of the ultraviolet absorber (C) include various types of ultraviolet absorbers such as a benzophenone-based ultraviolet absorber, a benzotriazole-based ultraviolet absorber, a triazine-based ultraviolet absorber, and a salicylic acid ester-based ultraviolet absorber.

The ultraviolet absorber (C) in the present embodiment preferably includes an ultraviolet absorber (C1) having a triazine skeleton. Therefore, the weather fastness of the laminated glass can be improved. In addition, it is possible to further improve the performance balance of transparency and visibility without causing yellowing of the resin (A) contained in the resin composition.

Examples of the ultraviolet absorber (C1) having a triazine skeleton include 2-[4,6-bis(2,4-dimethylphenyl)-1,3,5-triazine-2-yl]-5-(octyloxy)phenol, 2-(4,6-diphenyl-1,3,5-triazine-2-yl)-5-(hexyloxy)phenol, 2,4,6-tris(2-hydroxy-4-hexyloxy-3-methylphenyl)-1,3,5-triazine, and 2-(4,6-diphenyl-1,3,5-triazine-2-yl)-5-[2-(2-ethylhexyloxy)ethoxy]phenol.

Examples of the ultraviolet absorber having a benzotriazole skeleton include phenol, 2-(5-chloro-2H-benzotriazol-2-yl)-6-(1,1-dimethylethyl)-4-methyl and 2-phenol, 2-(2H-benzotriazol-2-yl)-4-(1,1,3,3-tetramethylbutyl).

In addition, two or more ultraviolet absorbers may be used.

From the viewpoint of further improving the weather fastness of the laminated glass, the content of the ultraviolet absorber (C1) having a triazine skeleton of the present embodiment is preferably 0.01% by mass or more, more preferably 0.03% by mass or more, still more preferably 0.05% by mass or more, even more preferably 0.08% by mass or more, yet still more preferably 0.10% by mass or more, yet still more preferably 0.13% by mass or more, yet even more preferably 0.15% by mass or more, and even still more preferably 0.18% by mass or more, and is preferably 2.0% by mass or less, more preferably 1.8% by mass or less, still more preferably 1.5% by mass or less, yet still more preferably 1.3% by mass or less, even more preferably 1.0% by mass or less, and even still more preferably 0.8% by mass or less, when the total amount of the resin composition is 100% by mass.

From the viewpoint of further improving the weather fastness of the laminated glass, the maximum absorption wavelength of the ultraviolet absorber (C) is preferably 250 nm or more, more preferably 270 nm or more, still more preferably 300 nm or more, and even still more preferably 325 nm or more, and is preferably 400 nm or less, more preferably 380 nm or less, and even still more preferably 360 nm or less.

From the viewpoint of further improving the dispersibility in the resin composition, the melting point of the ultraviolet absorber (C) is preferably 80°C or higher, more preferably 90°C or higher, and still more preferably 100°C or higher, and is preferably 180°C or lower, more preferably 170°C or lower, and still more preferably 160°C or lower.

From the viewpoint of further improving the weather fastness of the laminated glass, the content of the ultraviolet absorber (C) is preferably 0.01% by mass or more, more preferably 0.05% by mass or more, still more preferably 0.10% by mass or more, even more preferably 0.15% by mass or more, and even still more preferably 0.18% by mass or more, and is 5.0% by mass or less, preferably 3.0% by mass or less, more preferably 1.0% by mass or less, and still more preferably 0.80% by mass or less, when the total amount of the resin composition is 100% by mass.

### <Light Stabilizer (D)>

The resin composition in the present embodiment may further include a light stabilizer (D). In this manner, the photoxidation of the resin composition can be prevented by capturing active species initiating photodegradation in the resin used in the resin composition, and thus, the weather fastness of the laminated glass can be further improved.

As the light stabilizer (D), a hindered amine-based compound is preferable, and a hindered piperidine-based compound is more preferable.

Examples of the hindered amine-based light stabilizer include 4-acetoxy-2,2,6,6-tetramethylpiperidine, 4-stearyloyloxy-2,2,6,6-tetramethylpiperidine, 4-acryloyloxy-2,2,6,6-tetramethylpiperidine, 4-benzoyloxy-2,2,6,6-tetramethylpiperidine, 4-cyclohexanoyloxy-2,2,6,6-tetramethylpiperidine, 4-(o-chlorobenzoyloxy)-2,2,6,6-tetramethylpiperidine, 4-(phenoxyacetoxy)-2,2,6,6-tetramethylpiperidine, 1,3,8-triaza-7,7,9,9-tetramethyl-2,4-dioxo-3-n-octyl-spiro[4,5]decane, bis(2,2,6,6-tetramethyl-4-piperidyl)sebacate, bis(2,2,6,6-tetramethyl-4-piperidyl)terephthalate, bis(1,2,2,6,6-pentamethyl-4-piperidyl)sebacate, tris(2,2,6,6-tetramethyl-4-piperidyl)benzene-1,3,5-tricarboxylate, tris(2,2,6,6-tetramethyl-4-piperidyl)-2-acetoxypropane-1,2,3-tricarboxylate, tris(2,2,6,6-tetramethyl-4-piperidyl)-2-hydroxypropane-1,2,3-tricarboxylate, tris(2,2,6,6-tetramethyl-4-piperidyl)triazine-2,4,6-tricarboxylate, tris(2,2,6,6-tetramethyl-4-piperidine) phosphite, tris(2,2,6,6-tetramethyl-4-piperidyl)butane-1,2,3-tricarboxylate, tetrakis(2,2,6,6-tetramethyl-4-piperidyl)propane-1,1,2,3-tetracarboxylate, and tetrakis(2,2,6,6-tetramethyl-4-piperidyl)butane-1,2,3,4-tetracarboxylate.

From the viewpoint of further improving the weather fastness of the laminated glass, the content of the light stabilizer (D) is preferably 0.01% by mass or more, more preferably 0.05% by mass or more, and still more preferably 0.08% by mass or more, and is preferably 2% by mass or less, more preferably 1% by mass or less, even more preferably 0.5% by mass or less, and still more preferably 0.3% by mass or less, when the total amount of the resin composition is 100% by mass.

### <Antioxidant (E)>

The resin composition in the present embodiment may further include an antioxidant (E). In this manner, the oxidative deterioration in the resin used in the resin composition can be prevented, and thus, the weather fastness of the laminated glass can be further improved.

As the antioxidant (E), various hindered phenol-based or phosphite-based antioxidants are used. Specific examples of the hindered phenol-based antioxidant include 2,6-di-t-butyl-p-cresol, 2-t-butyl-4-methoxyphenol, 3-t-butyl-4-methoxyphenol, 2,6-di-t-butyl-4-ethylphenol, 2,2'-methylene bis(4-methyl-6-t-butylphenol), 2,2'-methylene bis(4-ethyl-6-t-butylphenol), 4,4'-methylene bis(2,6-di-t-butylphenol), 2,2'-methylene bis[6-(1-methylcyclohexyl)-p-cresol], bis[3,3-bis(4-hydroxy-3-t-butylphenyl)butyric acid] glycol ester, 4,4'-butylidene bis(6-t-butyl-m-cresol), 2,2'-ethylidene bis(4-sec-butyl-6-t-butylphenol), 2,2'-ethylidene bis(4,6-di-t-butylphenol), 1,1,3-tris(2-methyl-4-hydroxy-5-t-butylphenyl)butane, 1,3,5-tris(3,5-di-t-butyl-4-hydroxybenzyl)-2,4,6-trimethylbenzene, 2,6-diphenyl-4-octadecyloxyphenol, tetrakis[methylene-3-(3,5-di-t-butyl-4-hydroxyphenyl)propionate]methane, pentaerythritol tetrakis(3-(3,5-di-t-butyl-4-hydroxyphenyl)propionate), n-octadecyl-3-(3,5-di-t-butyl-4-hydroxyphenyl)propionate, 4,4'-thiobis(6-t-butyl-m-cresol), tocopherol, 3,9-bis[1,1-dimethyl-2-[β-(3-t-butyl-4-hydroxy-5-methylphenyl)propionyloxy]ethyl]2,4,8,10-tetraoxaspiro[5,5]undecane, and 2,4,6-tris(3,5-di-t-butyl-4-hydroxybenzylthio)-1,3,5-triazine.

In addition, specific examples of the phosphite-based antioxidant include 3,5-di-t-butyl-4-hydroxybenzylphosphonate dimethyl ester, bis(3,5-di-t-butyl-4-hydroxybenzyl)ethylphosphonate, and tris(2,4-di-t-butylphenyl)phosphonate.

From the viewpoint of further improving the weather fastness of the laminated glass, when the total content of the resin composition is 100% by mass, the content of the antioxidant (E) is preferably 0.001% by mass or more, more preferably 0.005% by mass or more, and still more preferably 0.01% by mass or more, and is preferably 1% by mass or less, more preferably 0.5% by mass or less, still more preferably 0.1% by mass or less, and even still more preferably 0.05% by mass or less.

### <Silane Coupling Agent (F)>

The resin composition in the present embodiment may further include a silane coupling agent (F). By including the silane coupling agent (F), the film-forming properties of the laminated glass interlayer film can be further improved.

Examples of the silane coupling agent include silane coupling agents such as alkoxysilanes having an amino group, a glycidyl group or an epoxy group. More specific examples thereof include γ-glycidoxypropyltrimethoxysilane, 3-glycidoxypropylmethyldimethoxysilane, 3-glycidoxypropylmethyldiethoxysilane, N-2-(aminoethyl)-3-aminopropyltrimethoxysilane, N-2-(aminoethyl)-3-aminopropylmethyldimethoxysilane, N-2-(aminoethyl)-3-aminopropylmethyldiethoxysilane, 3-aminopropyltrimethoxysilane, 3-aminopropyltriethoxysilane, N-phenyl-3-aminopropyltrimethoxysilane, and N-phenyl-3-aminopropyltriethoxysilane. These silane coupling agents may be used alone or in combination of two or more thereof.

Among these, from the viewpoint of further improving the performance balance of the optical characteristics, water resistance, and adhesiveness to glass of the obtained laminated glass, and stabilizing the film-forming properties during sheet processing, a silane coupling agent having an amino group, a glycidyl group, or an epoxy group is preferable, and a silane coupling agent having an amino group is more preferable.

From the viewpoint of further improving the film-forming properties of the laminated glass interlayer film, when the total amount of the resin composition is 100% by mass, the content of the silane coupling agent is preferably 0.001% by mass or more, more preferably 0.005% by mass or more, still more preferably 0.01% by mass or more, and even still more preferably 0.05% by mass or more, and is preferably 5% by mass or less, more preferably 2% by mass or less, and even still more preferably 1% by mass or less.

### (Other Components)

The resin composition according to the present embodiment can contain components other than the resin (A), the coloring agent (B), and the ultraviolet absorber (C) within a range that does not impair the object of the present invention. The other components are not limited, and examples thereof include a plasticizer, a wavelength converter, an antistatic agent, a surfactant, a foaming agent, a lubricant, a crystal nucleating agent, a crystallization accelerator, a crystallization retardant, a catalyst deactivator, a heat ray absorber, a heat ray reflector, a heat dissipation agent, a thermoplastic resin other than the resin (A), a thermosetting resin, an inorganic filler, an organic filler, an impact resistance improver, a slip agent, a crosslinking agent, a crosslinking aid, a tackifier, a processing aid, a mold release agent, a hydrolysis inhibitor, a heat resistance stabilizer, an anti-blocking agent, an antifogging agent, a flame retardant, a flame retardant aid, a light diffusing agent, an antibacterial agent, an antifungal agent, a dispersant, and other resins. The other components may be used alone or in combination of two or more thereof.

In the resin composition according to the present embodiment, from the viewpoint of further improving the performance balance of weather fastness, transparency, visibility, mechanical strength, and workability, the total content of the resin (A), the coloring agent (B), and the ultraviolet absorber (C) is preferably 50% by mass or more, more preferably 60% by mass or more, still more preferably 70% by mass or more, even more preferably 80% by mass or more, and even still more preferably 85% by mass or more, and is preferably 100% by mass or less when the total amount of the entire resin composition is 100% by mass.

### <Method for Producing Resin Composition>

The resin composition according to the present embodiment can be obtained by mixing the resin (A), the coloring agent (B), and the ultraviolet absorber (C). In the mixing, a generally used mixing device such as a screw extruder, a roll mixer, or a Banbury mixer can be used.

The mixing may be carried out by simultaneously blending the components (A) to (C) or may be carried out by separately blending the components. However, first, a method in which a master batch 1 in which the resin (A) and the ultraviolet absorber (C) are mixed and a master batch 2 in which the resin (A) and the coloring agent (B) are mixed are prepared, and then the master batch 1 and the master batch 2 are mixed with the resin (A) is preferable. In this manner, the dispersibility of the coloring agent (B) and the ultraviolet absorber (C) in the resin composition is further improved. In addition, in a case where the light stabilizer (D) and the antioxidant (E) are added, it is preferable that the light stabilizer (D) and the antioxidant (E) are added to the master batch 1.

In addition, in a case where the silane coupling agent (F) is added, it is desirable to add the silane coupling agent (F) after mixing the master batch 1 and the master batch 2 with the resin (A).

The resin (A) used in the master batch 1 may be the same as or different from the component of the resin (A) to be added separately from the master batch 1. In addition, the resin (A) used in the master batch 2 may be the same as or different from the component of the resin (A) to be added separately from the master batch 2. However, it is preferable that the total amount of the resin (A) used in the master batch 1 or the master batch 2 and the resin (A) added separately from the master batch is within the range of the content of the resin (A) with respect to the total amount of the resin composition for a laminated glass interlayer film described above.

The master batch 1 may contain a dispersant in addition to the ultraviolet absorber (C) and the resin (A). The master batch 2 may contain a dispersant in addition to the coloring agent (B) and the resin (A).

In addition, the total content of the master batch 1 and the master batch 2 with respect to the total amount of the resin composition is not limited, but in a case where the total content is set to 5% by mass or more and 20% by mass or less, the mixing properties and the extrudability of the resin composition can be improved.

Examples of the dispersant include a polyether-based dispersant.

### 2. Laminated Glass Interlayer Film

The laminated glass interlayer film 11 according to the present embodiment includes a layer formed from the resin composition according to the present embodiment. The laminated glass interlayer film 11 according to the present embodiment may have a single layer configuration or may have a multilayer configuration having two or more layers.

More specifically, the laminated glass interlayer film 11 according to the present embodiment may be a film having a single layer configuration composed of one layer formed from the resin composition according to the present embodiment, may be a film having a multilayer configuration composed of two or more layers formed from the resin composition according to the present embodiment, or may be a film having a multilayer configuration having at least one layer formed from the resin composition according to the present embodiment and at least one layer other than the layer formed from the resin composition according to the present embodiment.

Then, it is possible to produce laminated glass using the laminated glass interlayer film 11 according to the present embodiment.

In a case where the laminated glass interlayer film 11 has a multilayer structure of two or more layers, the color tone of the laminated glass can be adjusted by a combination of the respective layers. For example, by producing a plurality of layers having a small thickness, the color tone can be adjusted according to the number of layers to be laminated. In addition, by producing a plurality of layers having different coloring agents, laminated glasses having different tones can be easily produced by combining the layers.

In a case where the laminated glass interlayer film 11 according to the present embodiment has a multilayer structure, it is preferable that the laminated glass interlayer film 11 has a two-layer structure in which two outer layers (hereinafter, also referred to as adhesive layers) are laminated and at least one outer layer is formed from the resin composition according to the present embodiment, or a three-layer structure including an intermediate layer and two outer layers formed on both surfaces of the intermediate layer so as to sandwich the intermediate layer, in which at least one layer of the outer layer and the intermediate layer is formed from the resin composition according to the present embodiment. From the viewpoint of further improving the performance balance of transparency and adhesiveness, it is more preferable that the three-layer configuration is adopted, and it is still more preferable that a three-layer configuration is adopted in which the outer layer and the intermediate layer are formed from the resin composition according to the present embodiment.

In a film having a multilayer configuration having two or more layers formed from the resin composition according to the present embodiment, the composition of the resin composition according to the present embodiment, the type of the resin (A) contained, the type of the coloring agent (B), and the type of the ultraviolet absorber (C) in each layer may be the same as or different from each other.

By using the coloring agents (B) different from each other in each layer, it is possible to design the transmittance in a specific wavelength range, and it is possible to adjust the color tone according to the application.

The thickness of the laminated glass interlayer film 11 according to the present embodiment is, for example, 0.1 mm or more, preferably 0.2 mm or more, and more preferably 0.3 mm or more, and is preferably 10 mm or less, more preferably 5 mm or less, and still more preferably 3 mm or less.

When the thickness of the laminated glass interlayer film 11 is equal to or larger than the lower limit, the mechanical strength of the laminated glass interlayer film 11 can be further improved. In addition, in a case where the thickness of the laminated glass interlayer film 11 is equal to or less than the above-described upper limit value, the performance balance of the optical characteristics and the interlayer adhesiveness of the obtained laminated glass can be further improved.

In a case in which the laminated glass interlayer film 11 according to the present embodiment has a multilayer configuration, a layer formed from the resin composition (P) according to the present embodiment may be used in an outer layer or may be used in an intermediate layer.

From the viewpoint of further improving the adhesiveness to the transparent plate-like member, in a case where the resin composition according to the present embodiment is used for the outer layer, the resin composition preferably contains a silane coupling agent (F).

In addition, in a case where the resin composition according to the present embodiment is used for the intermediate layer, the resin composition may contain the silane coupling agent (F). However, for example, in a case where the resin composition according to the present embodiment is used for the outer layer and the intermediate layer, and the layer configuration is set to the "outer layer/intermediate layer/outer layer" or the like, when the intermediate layer is not required to have adhesiveness to a material other than the outer layer, it is preferable that the resin composition used for the intermediate layer does not substantially contain the silane coupling agent (F). Specifically, from the viewpoint of further improving the production stability, the content of the silane coupling agent (F) in the intermediate layer is preferably 0.1% by mass or less when the solid content of the intermediate layer is 100% by mass. Still more preferably, the silane coupling agent (F) is not included in the intermediate layer (0% by mass).

In addition, in a case where the laminated glass interlayer film 11 according to the present embodiment includes the outer layer and the intermediate layer, the thickness of the outer layer is not limited, but the range of a thickness a of the outer layer is preferably 1 µm or more, more preferably 10 µm or more, and still more preferably 20 µm or more, and is preferably 500 µm or less and more preferably 300 µm or less.

In a case where the thickness a of the outer layer is equal to or greater than the above-described lower limit value, the adhesive strength can be further improved. In addition, in a case where the thickness a of the outer layer is equal to or smaller than the above-described upper limit value, the transparency is further improved.

In addition, in a case where the laminated glass interlayer film 11 according to the present embodiment includes the outer layer and the intermediate layer, from the viewpoint of further improving transparency, the proportion of the intermediate layer in the thickness of the entire layer may be high. Specifically, a thickness b of the intermediate layer can be set freely within a range of subtracting the preferable thicknesses a of the outer layers from a range of 0.1 mm to 10 mm, which is a preferable total thickness.

In addition, in a case where the laminated glass interlayer film 11 according to the present embodiment includes the outer layer and the intermediate layer, a ratio (a/b) of the thickness of the outer layer (thickness a) to the thickness of the intermediate layer (thickness b) is preferably 1/20 or more, more preferably 1/15 or more, and still more preferably 1/10 or more, and is preferably 5/1 or less and more preferably 3/1 or less. Here, in a case in which the laminated glass interlayer film 11 according to the present embodiment includes two outer layers, the thickness a of the outer layer is an average value of the thickness of the two outer layers.

In a case where the ratio (a/b) of the thickness of the outer layer to the thickness of the intermediate layer is within the above-described range, the performance balance of adhesiveness and transparency is further improved.

The method for producing the laminated glass interlayer film 11 according to the present embodiment is not limited, and any conventionally known production method may be used.

Regarding the method for producing the laminated glass interlayer film 11 according to the present embodiment, for example, a press molding method, an extrusion molding method, a T-die molding method, an injection molding method, a compression molding method, a cast molding method, a calendar molding method, an inflation molding method or the like may be used. As for the method for producing the resin composition, as described above, a method in which a master batch is prepared in advance and then the resin composition is produced can be used. In an extruder, each master batch, the resin (A), and the like are supplied from each hopper, and the mixture is subjected to extrusion molding in a sheet shape.

### 3. Laminated Glass

FIG. 1 is a cross-sectional view schematically illustrating an example of the structure of a laminated glass 10 according to the embodiment of the present invention.

The laminated glass 10 according to the present embodiment includes a laminated glass interlayer film 11 according to the present embodiment, and transparent plate-like members 13 provided on both surfaces of the laminated glass interlayer film 11. The laminated glass 10 according to the present embodiment has excellent weather fastness by including the laminated glass interlayer film 11 according to the present embodiment.

Two or more layers of the laminated glass interlayer films 11 may be used, or a layer formed from another resin may be interposed between two laminated glass interlayer films 11 to form three or more layers.

Although the transparent plate-like member 13 is not particularly limited, for example, a generally used transparent plate glass may be used. Examples thereof include inorganic glass such as float plate glass, polished plate glass, figured glass, network wired plate glass, wired plate glass, colored plate glass, heat-ray absorbing plate glass, heat-ray reflective plate glass, and green glass. In addition, an organic plastic plate such as a polycarbonate plate, a poly(meth)acrylate plate, a polymethyl (meth)acrylate plate, a polystyrene plate, a cyclic polyolefin plate, a polyethylene terephthalate plate, a polyethylene naphthalate plate, or a polyethylene butyrate plate can be used.

The transparent plate-like member 13 may be appropriately subjected to a surface treatment such as a corona treatment, a plasma treatment, or a flame treatment.

The thickness of the transparent plate-like member 13 is, for example, 1 mm or more and 20 mm or less. In the laminated glass 10 according to the present embodiment, regarding the respective transparent plate-like members 13 provided on both surfaces of the laminated glass interlayer film 11, the same members may be used, or different plate-like members may be used in combination.

The method for producing the laminated glass 10 according to the present embodiment is not particularly limited, and for example, conventionally known production methods such as a nip roll method, an autoclave method, a vacuum bag method, and a vacuum laminator method may be used. These production methods may be used alone or in combination of two or more thereof for production.

As the method for producing the laminated glass 10 according to the present embodiment, for example, as shown in FIG. 1, a method of interposing the laminated glass interlayer film 11 according to the present embodiment between two transparent plate-like members 13 and then heating and pressurizing the laminate, or the like is used.

Among these, as a method for producing the laminated glass 10 according to the present embodiment, a method in which a nip roll method and an autoclave method are combined, or a method in which a vacuum bag method and an autoclave method are combined is preferable.

The method in which a nip roll method and an autoclave method are combined is, for example, a method in which a laminate obtained by interposing the laminated glass interlayer film 11 according to the present embodiment between two transparent plate-like members 13 is temporarily pressure-bonded by a nip roll, and then the laminate is thermally pressure-bonded by heating and pressurizing treatment using an autoclave to obtain the laminated glass 10.

The method in which a vacuum bag method and an autoclave method are combined is, for example, a method in which a laminate obtained by interposing the laminated glass interlayer film 11 according to the present embodiment between two transparent plate-like members 13 is put into a vacuum bag, and then the laminate is temporarily pressure-bonded by reducing the pressure in the vacuum bag, and then the laminate is thermally pressure-bonded by heating and pressurizing treatment using an autoclave to obtain the laminated glass 10.

These laminated glasses can be used for various use applications, and for example, they are used in laminated glass for construction, laminated glass for automobiles, general buildings, agricultural buildings, and railway windows; however, the use applications are not limited to these use applications.

Although the embodiments of the present invention have been described above, these are examples of the present invention, and various configurations other than the above can be adopted.

Hereinafter, reference forms will be added.
[1] A resin composition for a laminated glass interlayer film including:
   a resin (A);
   a coloring agent (B); and
   an ultraviolet absorber (C),
   in which the resin composition has, in a total light transmittance of laminated glass formed from the resin composition, which is measured by the following (method),
   a transmission spectrum in which a light transmittance at a wavelength of 400 nm is 50% or less, and
   a wavelength at which the light transmittance is minimized in a wavelength range of 420 nm or more and 720 nm or less is 570 nm or more and 605 nm or less.
   (method)
   a laminated glass interlayer film having a thickness of **1.6** mm and formed from the resin composition is obtained, next, the obtained laminated glass interlayer film is interposed between glass plates having a thickness of **3.2** mm to have a layer configuration of glass plate/laminated glass interlayer film/glass plate, and the laminate is retained in a vacuum at 140°C for 10 minutes using a vacuum laminator, and then pressed at 0.1 MPa (gauge pressure) for 10 minutes to obtain a laminated glass, next, a total light transmittance of the obtained laminated glass is measured with a haze meter in accordance with JIS K 7136: 2000, and a light transmittance at a wavelength of 400 nm and a wavelength at which the light transmittance is minimized in a wavelength range of 420 nm or more and 720 nm or less are read.
[2] The resin composition according to [1],
   in which the light transmittance at a wavelength of 400 nm is 1% or more.
[3] The resin composition according to [1] or [2],
   in which a light transmittance at a wavelength at which the light transmittance is a minimized in a wavelength range of 570 nm or more and 605 nm or less is 1% or more and 80% or less.
[4] The resin composition according to any one of [1] to [3],
   in which the coloring agent (B) has a maximum absorption wavelength in a wavelength range of 570 nm to 605 nm.
[5] The resin composition according to any one of [1] to [4],
   in which the coloring agent (B) includes at least one selected from the group consisting of a tetraazaporphyrin compound and an azo compound.
[6] The resin composition according to any one of [1] to [4],
   in which the coloring agent (B) includes a tetraazaporphyrin compound.
[7] The resin composition according to any one of [1] to [6],
   wherein a content of the coloring agent (B) is 1 ppm or more and 500 ppm or less with respect to a total amount of the resin composition.
[8] The resin composition according to any one of [1] to [7],
   in which the ultraviolet absorber (C) has a maximum absorption wavelength in a wavelength range of 300 nm to 400 nm.
[9] The resin composition according to any one of [1] to [8],
   in which the ultraviolet absorber (C) has a triazine skeleton.
[10] The resin composition according to any one of [1] to [9],
   in which a content of the ultraviolet absorber (C) is 0.01% by mass or more and 5.0% by mass or less when a total amount of the resin composition is 100% by mass.
[11] The resin composition according to any one of [1] to [10], further including:
   a silane coupling agent (F).
[12] The resin composition according to any one of [1] to [11],
   in which the resin (A) includes at least one selected from the group consisting of an ethylene-vinyl ester copolymer, an ethylene-α-olefin copolymer, an ethylene-unsaturated carboxylic acid-based copolymer, an ionomer of an ethylene-unsaturated carboxylic acid-based copolymer, an ethylene-unsaturated carboxylic acid ester copolymer, polyvinyl butyral, a thermoplastic polyurethane, and a silicone resin.
[13] The resin composition according to any one of [1] to [11],
   in which the resin (A) includes an ionomer of an ethylene-unsaturated carboxylic acid-based copolymer.
[14] The resin composition according to [13],
   in which a metal ion constituting the ionomer of the ethylene-unsaturated carboxylic acid-based copolymer includes one or two or more selected from the group consisting of a sodium ion, a magnesium ion, and a zinc ion.
[15] The resin composition according to any one of [1] to [14],
   in which a total content of the resin (A), the coloring agent (B), and the ultraviolet absorber (C) is 50% by mass or more and 100% by mass or less when a total amount of the resin composition is 100% by mass.
[16] A laminated glass interlayer film including:
   a layer formed from the resin composition according to any one of [1] to [15].
[17] The laminated glass interlayer film according to [16],
   in which the laminated glass interlayer film has a multilayer structure including at least one layer formed from the resin composition.
[18] A laminated glass including:
   the laminated glass interlayer film according to [16] or [17]; and
   a transparent plate-like member that is provided on at least one surface of the laminated glass interlayer film.

### [Examples]

Hereinafter, the present embodiment will be described in detail with reference to Examples and the like. It should be noted that the present embodiment is not limited to the descriptions of these examples.

In Examples and Comparative Examples, the following materials were used. The MFR was measured under a condition of a temperature of 190°C and a load of 2160 g in accordance with JIS K 7210-1: 2014.

### <Resin (A)>

· Ionomer 1 of ethylene-unsaturated carboxylic acid-based copolymer: ethylene content: 80% by mass, methacrylic acid content: 20% by mass, metal ion: magnesium ion, degree of neutralization: 43%, MFR: 2.3 g/10 min
· Ethylene-methacrylic acid copolymer 1: ethylene content: 80% by mass, methacrylic acid content: 20% by mass
· Polyvinyl butyral 1: S-LEC B BL-5Z, manufactured by Sekisui Chemical Co., Ltd., hydroxyl group content: 21 % by mole, degree of acetalization: 77% by mass, glass transition temperature: 67°C
· Polyvinyl butyral 2: S-LEC B BM-SHZ, manufactured by Sekisui Chemical Co., Ltd., hydroxyl group content: 21 % by mole, degree of acetalization: 77% by mass, glass transition temperature: 68°C

### <Coloring Agent (B)>

· Coloring agent 1: tetraazaporphyrin coloring agent mixture consisting of tetraazaporphyrin compound isomers (manufactured by Yamamoto Chemicals Inc., kukkiri shikiso (registered trademark), maximum absorption wavelength: 585 nm)

### <Ultraviolet Absorber (C)>

· Ultraviolet absorber 1: phenol, 2-(2H-benzotriazol-2-yl)-4,6-bis(1-methyl-1-phenolethyl), manufactured by BASF SE, product name: Tinuvin 234, ultraviolet maximum absorption wavelength: 304 nm, 350 nm
· Ultraviolet absorber 2: having a triazine skeleton, manufactured by BASF SE, product name: Tinuvin 1600, ultraviolet maximum absorption wavelength: 320 nm
· Ultraviolet absorber 3: 2,4,6-tris(2-hydroxy-4-hexyloxy-3-methylphenyl)-1,3,5-triazine, manufactured by ADEKA CORPORATION, product name: LA-F70, ultraviolet maximum absorption wavelength: 358 nm
· Ultraviolet absorber 4: 2-(4,6-diphenyl-1,3,5-triazine-2-yl)-5-[2-(2-ethylhexanoyloxy)ethoxy]phenol, manufactured by ADEKA CORPORATION, product name: LA-46, ultraviolet maximum absorption wavelength: 276 nm, 340 nm

### <Light Stabilizer (D)>

· Light stabilizer 1: bis(2,2,6,6-tetramethyl-4-piperidyl) sebacate, manufactured by BASF SE, product name: Tinuvin 770DF

### <Antioxidant (E)>

· Antioxidant 1: pentaerythritol tetrakis(3-(3,5-di-t-butyl-4-hydroxyphenyl)propionate), manufactured by BASF SE, product name: IRGANOX 1010

### <Silane Coupling Agent (F)>

· Silane coupling agent 1: N-2-(aminoethyl)-3-aminopropyl methyldimethoxysilane, manufactured by Shin-Etsu Chemical Co., Ltd., product name: KBM602

### <Weather Fastness Stabilizer Resin (Master Batch 1)>

The materials were melt-kneaded at 130°C in a 30 mmφ twinscrew extruder (manufactured by Ikegai Corporation, PCM30) at the blending ratios shown in Table 1 (the unit of the material in the table represents parts by mass) to produce weather fastness stabilizer resins 1 to 11.

### [Table 1]

**Table 1**

| (Parts by mas) | Ethylene-methacrylic acid copolymer 1 | Ultraviolet absorber 1 | Ultraviolet absorber 2 | Ultraviolet absorber 3 | Ultraviolet absorber 4 | Light stabilizer 1 | Antioxidant 1 | Total amount |
|---|---|---|---|---|---|---|---|---|
| Weather fastness stabilizer resin 1 | 93.7 | 4.05 | | | | 1. 95 | 0.3 | 100 |
| Weather fastness stabilizer resin 2 | 96.85 | 0.75 | 0.25 | | | 1 | 0.15 | 99 |
| Weather fastness stabilizer resin 3 | 96.85 | 1.5 | 0.5 | | | 1 | 0.15 | 100 |
| Weather fastness stabilizer resin 4 | 96.85 | 1.25 | 0.75 | | | 1 | 0.15 | 100 |
| Weather fastness stabilizer resin 5 | 96.85 | 1.5 | 0.25 | 0.25 | | 1 | 0.15 | 100 |
| Weather fastness stabilizer resin 6 | 96.85 | 1.5 | 0.25 | | 0.25 | 1 | 0.15 | 100 |
| Weather fastness stabilizer resin 7 | 94.1 | 3.05 | 0.6 | | | 1.95 | 0.3 | 100 |
| Weather fastness stabilizer resin 8 | 93.7 | | 4 | | | 2 | 0.3 | 100 |
| Weather fastness stabilizer resin 9 | 93.7 | | 2 | 2 | | 2 | 0.3 | 100 |
| Weather fastness stabilizer resin 10 | 93.7 | | 2 | 2 | 2 | 3 | 0.3 | 103 |
| Weather fastness stabilizer resin 11 | 93.7 | | | 4 | | 2 | 0.3 | 100 |

### <Coloring Agent Resin (Master Batch 2)>

The ionomer 1 of ethylene-unsaturated carboxylic acid-based copolymer and the coloring agent 1 were melt-kneaded at 180°C in a 30 mmφ single-screw extruder (manufactured by Thermoplastic Co., Ltd.) at a blending ratio such that the content of the coloring agent 1 was 0.04% by mass when the total amount of the coloring agent resin was 100% by mass, thereby producing a coloring agent resin.

### [Examples 1 to 8 and Comparative Examples 1 to 7]

### <Preparation of Laminated Glass Interlayer Film>

The ionomer 1 of ethylene-unsaturated carboxylic acid-based copolymer, the weather fastness stabilizer resins, and the coloring agent resin were mixed in the blending ratios shown in Tables 2 and 3 (the unit of the material in the tables represents parts by mass), the silane coupling agent 1 was further added thereto so that its amount was 0.1 parts by mass with respect to 100 parts by mass of the total amount of the ionomer 1 of ethylene-unsaturated carboxylic acid-based copolymer, the weather fastness stabilizer resins, and the coloring agent resin, and mixed, and formed at a processing temperature of 160°C using a 40 mmφ T die extruder (manufactured by Nakadate Co., Ltd.) to obtain laminated glass interlayer films having a thickness of 1.6 mm for each example.

The ionomer 1 of ethylene-unsaturated carboxylic acid-based copolymer is also simply referred to as ionomer 1.

### <Preparation of Laminated Glass>

The obtained laminated glass interlayer films were cut into a size of 120 mm × 75 mm × a thickness of 1.6 mm. Next, each cut laminated glass interlayer film was interposed between glass plates (manufactured by AGC Fabritech Co., Ltd., product name: high-transmittance float glass) having a size of 120 mm × 75 mm × a thickness of 3.2 mm on both the front surface and the back surface of each laminated glass interlayer film to have a layer configuration of glass plate/laminated glass interlayer film/glass plate (total thickness: 8.0 mm), and retained in vacuum at 140°C for 10 minutes using a vacuum laminator, and then pressed at 0.1 MPa (gauge pressure) for 10 minutes to obtain laminated glasses. The obtained laminated glasses were cooled by slow cooling so as to return to room temperature over 30 minutes.

### [Example 9]

A laminated glass interlayer film having a thickness of 500 µm was prepared by melt-kneading 0.2 parts by mass of the ultraviolet absorber 2, 0.1 parts by mass of the light stabilizer 1, 0.15 parts by mass of the antioxidant 1, and 0.002 parts by mass of the coloring agent 1 with respect to 100.00 parts by mass of the polyvinyl butyral 1 using a Laboplastomil 10C100 (manufactured by Toyo Seiki Seisaku-sho, Ltd.) at 160°C and a screw rotation speed of 50 rpm for 5 minutes, heating the mixture at 160°C for 4 minutes, performing degassing four times, and performing press-molding under pressure for 4 minutes.

Then, a laminated glass was obtained according to the method described in <Preparation of Laminated Glass> described above.

### [Example 10]

A laminated glass interlayer film having a thickness of 500 µm was prepared by melt-kneading 0.2 parts by mass of the ultraviolet absorber 2, 0.1 parts by mass of the light stabilizer 1, 0.15 parts by mass of the antioxidant 1, and 0.002 parts by mass of the coloring agent 1 with respect to 100.00 parts by mass of the polyvinyl butyral 2 using a Laboplastomil 10C100 (manufactured by Toyo Seiki Seisaku-sho, Ltd.) at 180°C and a screw rotation speed of 50 rpm for 5 minutes, heating the mixture at 160°C for 4 minutes, performing degassing four times, and performing press-molding under pressure for 4 minutes.

Then, a laminated glass was obtained according to the method described in <Preparation of Laminated Glass> described above.

Next, an ultraviolet irradiation test was performed using the laminated glasses obtained above to measure the light transmittance and to evaluate the weather fastness.

### <Ultraviolet Irradiation Test>

The ultraviolet irradiation test was performed by irradiating the laminated glasses obtained above with ultraviolet rays using a device: Ci4000 type, manufactured by ATLAS Corporation, and a light source: xenon arc lamp, under the conditions: 180 W/m² (3 Sun), an exposure time: 0 to 1000 hours, and a black standard temperature: 63°C.

### <Light Transmittance>

The total light transmittance before ultraviolet irradiation and the total light transmittance after ultraviolet irradiation for 1000 hours were measured using a haze meter (manufactured by Murakami Color Research Laboratory Co., Ltd., product name: haze meter HM150) in accordance with JIS K 7136: 2000. The light transmittance (T₀) before ultraviolet irradiation, the light transmittance (T₁) after ultraviolet irradiation for 1000 hours, and the absolute value |T₁ - T₀| of the change rate of the light transmittance (T₁) after ultraviolet irradiation for 1000 hours to the light transmittance (T₀) before ultraviolet irradiation at wavelengths of 400 nm, 500 nm, 585 nm, and 700 nm are shown in Tables 2, 3, and 4. In addition, the wavelengths at which the light transmittance is minimized in a wavelength range of 420 nm or more and 720 nm or less are shown in Tables 2, 3, and 4.

### <Evaluation of Weather Fastness>

The weather fastness was evaluated by the absolute value |T₁ - T₀| of the change rate of the light transmittance (T₁) after at 585 nm for 1000 hours at 585 nm to the light transmittance (T₀) before ultraviolet irradiation at 585 nm.

The evaluation results of the weather fastness were classified based on the following evaluation standards. The results are shown in Tables 2, 3, and 4.

### (Evaluation Standards for Weather Fastness)

A (excellent): The absolute value of the change rate is 0% or more and less than 20%.
B (good): The absolute value of the change rate is 20% or more and less than 30%.
C (poor): The absolute value of the change rate is 30% or more.

### [Table 2]

**Table 2**

| Blending (parts by mass) | | Example 1 | Example 2 | Example 3 | Example 4 | Example 5 | Example 6 | Example 7 | Example 8 |
|---|---|---|---|---|---|---|---|---|---|
| Ionomer 1 | | 90.00 | 90.00 | 85.00 | 85.00 | 90.00 | 85.00 | 90.00 | 85.00 |
| Coloring agent resin 1 | | 5.00 | 5.00 | 5.00 | 5.00 | 5.00 | 5.00 | 5.00 | 5.00 |
| Weather fastness stabilizer resin 1 | | | | | | | | | |
| Weather fastness stabilizer resin 2 | | | | | | | | | |
| Weather fastness stabilizer resin 3 | | | | | | | | | |
| Weather fastness stabilizer resin 4 | | | | | | | | | |
| Weather fastness stabilizer resin 5 | | | | | | | | | |
| Weather fastness stabilizer resin 6 | | | | | | | | | |
| Weather fastness stabilizer resin 7 | | | | | | | | | |
| Weather fastness stabilizer resin 8 | | | | | | 1.25 | 2.50 | | |
| Weather fastness stabilizer resin 9 | | 5.00 | | | 10.00 | | | | |
| Weather fastness stabilizer resin 10 | | | 5.00 | 10.00 | | | | | |
| Weather fastness stabilizer resin 11 | | | | | | 3.75 | 7.50 | 5.00 | 10.00 |
| Coloring agent content (ppm) | Coloring agent 1 | 20 | 20 | 20 | 20 | 20 | 20 | 20 | 20 |
| Ultraviolet absorber content (% by mass) | Ultraviolet absorber 1 | | | | | | | | |
| | Ultraviolet absorber 2 | 0.1 | 0.1 | 0.2 | 0.2 | 0.05 | 0.1 | | |
| | Ultraviolet absorber 3 | 0.1 | 0.1 | 0.2 | 0.2 | 0.15 | 0.3 | 0.2 | 0.4 |
| | Ultraviolet absorber 4 | | 0.1 | 0.2 | | | | | |
| Wavelength at which light transmittance is minimum at 420 to 720 nm (nm) | Wavelength before ultraviolet irradiation (nm) | 584 | 584 | 585 | 584 | 584 | 584 | 584 | 584 |
| | Wavelength after ultraviolet irradiation for 1000 hours (nm) | 584 | 585 | 585 | 584 | 584 | 584 | 584 | 585 |
| Wavelength at which light transmittance is minimum at 570 to 605 nm (nm), and light transmittance at the wavelength | Wavelength before ultraviolet irradiation (nm) | 584 | 584 | 585 | 584 | 584 | 584 | 584 | 584 |
| | T₀ before ultraviolet irradiation (%) | 18.7 | 23.8 | 19.0 | 17.8 | 13.6 | 13.7 | 17.3 | 23.7 |
| | Wavelength after ultraviolet irradiation for 1000 hours (nm) | 584 | 585 | 585 | 584 | 584 | 584 | 584 | 585 |
| | T₁ after ultraviolet irradiation for 1000 hours (%) | 34.0 | 40.8 | 34.0 | 40.8 | 31.3 | 35.2 | 28.2 | 35.9 |
| | Change rate \|T₁ - T₀\| (%) | 15.4 | 17.0 | 15.0 | 23.0 | 17.7 | 21.4 | 10.9 | 12.2 |
| Light transmittance (400 nm) | T₀ before ultraviolet irradiation (%) | 32.8 | 33.4 | 6.4 | 10.0 | 17.9 | 4.2 | 13.4 | 3.6 |
| | T₁ after ultraviolet irradiation for 1000 hours (%) | 32.1 | 33.1 | 6.1 | 12.8 | 18.1 | 6.6 | 9.4 | 2.5 |
| | Change rate \|T₁ - T₀\| (%) | 0.7 | 0.3 | 0.3 | 2.8 | 0.2 | 2.4 | 4.0 | 1.2 |
| Light transmittance (500 nm) | T₀ before ultraviolet irradiation (%) | 84.5 | 84.4 | 81.0 | 82.2 | 83.3 | 82.4 | 85.0 | 85.1 |
| | T₁ after ultraviolet irradiation for 1000 hours (%) | 82.0 | 82.4 | 81.9 | 83.5 | 82.3 | 82.6 | 80.4 | 82.4 |
| | Change rate \|T₁ - T₀\| (%) | 2.5 | 2.0 | 0.9 | 1.3 | 1.0 | 0.2 | 4.6 | 2.7 |
| Light transmittance (585 nm) | T₀ before ultraviolet irradiation (%) | 18.7 | 23.8 | 19.0 | 17.8 | 13.7 | 13.8 | 17.3 | 23.8 |
| | T₁ after ultraviolet irradiation for 1000 hours (%) | 34.0 | 40.8 | 34.0 | 40.8 | 31.4 | 35.2 | 28.2 | 35.9 |
| | Change rate \|T₁ - T₀\| (%) | 15.3 | 16.9 | 15.0 | 23.0 | 17.7 | 21.5 | 10.8 | 12.1 |
| Evaluation of weather fastness | | A | A | A | B | A | B | A | A |
| Light transmittance (700 nm) | T₀ before ultraviolet irradiation (%) | 88.0 | 87.5 | 85.7 | 86.9 | 88.0 | 87.5 | 88.5 | 88.2 |
| | T₁ after ultraviolet irradiation for 1000 hours (%) | 85.9 | 85.6 | 85.3 | 87.4 | 86.6 | 86.5 | 84.2 | 84.6 |
| | Change rate \|T₁ - T₀\| (%) | 2.0 | 1.9 | 0.5 | 0.5 | 1.4 | 1.0 | 4.4 | 3.6 |

### [Table 3]

**Table 3**

| Blending (parts by mass) | | Example 9 | Example 10 |
|---|---|---|---|
| Polyvinyl butyral resin 1 | | 100 | |
| Polyvinyl butyral resin 2 | | | 100 |
| Coloring agent content (ppm) | Coloring agent 1 | 20 | 20 |
| Ultraviolet absorber content (% by mass) | Ultraviolet absorber 2 | 0.2 | 0.2 |
| Wavelength at which light transmittance is minimum at 420 to 720 nm (nm) | Wavelength before ultraviolet irradiation (nm) | 583 | 584 |
| | Wavelength after ultraviolet irradiation for 1000 hours (nm) | 583 | 584 |
| Wavelength at which light transmittance is minimum at 570 to 605 nm (nm), and light transmittance at the wavelength | Wavelength before ultraviolet irradiation (nm) | 583 | 584 |
| | T₀ before ultraviolet irradiation (%) | 27.2 | 29.5 |
| | Wavelength after ultraviolet irradiation for 1000 hours (nm) | 583 | 584 |
| | T₁ after ultraviolet irradiation for 1000 hours (%) | 38.5 | 37.8 |
| | Change rate \|T₁ - T₀\| (%) | 11.3 | 8.3 |
| Light transmittance (400 nm) | T₀ before ultraviolet irradiation (%) | 61.4 | 52.4 |
| | T₁ after ultraviolet irradiation for 1000 hours (%) | 62.4 | 56.5 |
| | Change rate \|T₁ - T₀\| (%) | 6.0 | 4.1 |
| Light transmittance (500 nm) | T₀ before ultraviolet irradiation (%) | 85.0 | 80.1 |
| | T₁ after ultraviolet irradiation for 1000 hours (%) | 85.3 | 79.2 |
| | Change rate \|T₁ - T₀\| (%) | 0.3 | 0.9 |
| Light transmittance (585 nm) | T₀ before ultraviolet irradiation (%) | 27.2 | 29.5 |
| | T₁ after ultraviolet irradiation for 1000 hours (%) | 38.5 | 37.8 |
| | Change rate \|T₁ - T₀\| (%) | 11.3 | 8.3 |
| Evaluation of weather fastness | | A | A |
| Light transmittance (700 nm) | T₀ before ultraviolet irradiation (%) | 87.4 | 85.1 |
| | T₁ after ultraviolet irradiation for 1000 hours (%) | 87.8 | 84.0 |
| | Change rate \|T₁ - T₀\| (%) | 0.4 | 1.1 |

### [Table 4]

**Table 4**

| Blending (parts by mass) | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Ionomer 1 | | 90.00 | 85.00 | 85.00 | 85.00 | 85.00 | 85.00 | 90.00 |
| Coloring agent resin 1 | | 5.00 | 5.00 | 5.00 | 5.00 | 5.00 | 5.00 | 5.00 |
| Weather fastness stabilizer resin 1 | | 5.00 | | | | | | |
| Weather fastness stabilizer resin 2 | | | 10.00 | | | | | |
| Weather fastness stabilizer resin 3 | | | | 10.00 | | | | |
| Weather fastness stabilizer resin 4 | | | | | 10.00 | | | |
| Weather fastness stabilizer resin 5 | | | | | | 10.00 | | |
| Weather fastness stabilizer resin 6 | | | | | | | 10.00 | |
| Weather fastness stabilizer resin 7 | | | | | | | | 5.00 |
| Weather fastness stabilizer resin 8 | | | | | | | | |
| Weather fastness stabilizer resin 9 | | | | | | | | |
| Weather fastness stabilizer resin 10 | | | | | | | | |
| Weather fastness stabilizer resin 11 | | | | | | | | |
| Coloring agent content (ppm) | Coloring agent 1 | 20 | 20 | 20 | 20 | 20 | 20 | 20 |
| Ultraviolet absorber content (% by mass) | Ultraviolet absorber 1 | 0.2 | 0.075 | 0.15 | 0.125 | 0.15 | 0.15 | 0.1525 |
| | Ultraviolet absorber 2 | | 0.025 | 0.05 | 0.075 | 0.025 | 0.025 | 0.03 |
| | Ultraviolet absorber 3 | | | | | 0.025 | | |
| | Ultraviolet absorber 4 | | | | | | 0.025 | |
| Wavelength at which light transmittanc e is minimum at 420 to 720 nm (nm) | Wavelength before ultraviolet irradiation (nm) | 584 | 584 | 584 | 584 | 584 | 584 | 584 |
| | Wavelength after ultraviolet irradiation for 1000 hours (nm) | 620 | 621 | 587 | 587 | 586 | 588 | 588 |
| Wavelength at which light transmittanc e is minimum at 570 to 605 nm (nm), and light transmittanc e at the wavelength | Wavelength before ultraviolet irradiation (nm) | 584 | 584 | 584 | 584 | 584 | 584 | 584 |
| | T₀ before ultraviolet irradiation (%) | 17.9 | 18.7 | 17.3 | 17.3 | 17.1 | 16.2 | 21.0 |
| | Wavelength after ultraviolet irradiation for 1000 hours (nm) | 588 | 588 | 587 | 587 | 586 | 588 | 588 |
| | T₁ after ultraviolet irradiation for 1000 hours (%) | 63.0 | 64.6 | 60.5 | 57.2 | 54.8 | 60.0 | 65.4 |
| | Change rate \|T₁ - T₀\| (%) | 45.1 | 45.9 | 43.2 | 39.9 | 37.7 | 43.8 | 44.4 |
| Light transmittanc e (400 nm) | T₀ before ultraviolet irradiation (%) | 56.5 | 63.1 | 63.4 | 61.8 | 58.0 | 64.7 | 55.2 |
| | T₁ after ultraviolet irradiation for 1000 hours (%) | 71.1 | 72.4 | 71.6 | 70.4 | 63.6 | 71.9 | 72.3 |
| | Change rate \|T₁ - T₀\| (%) | 14.6 | 9.3 | 8.2 | 8.6 | 5.6 | 7.2 | 17.0 |
| Light transmittanc e (500 nm) | T₀ before ultraviolet irradiation (%) | 83.7 | 83.6 | 82.5 | 81.9 | 82.8 | 83.0 | 83.4 |
| | T₁ after ultraviolet irradiation for 1000 hours (%) | 75.2 | 77.2 | 77.2 | 78.0 | 76.5 | 77.3 | 79.9 |
| | Change rate \|T₁ - T₀\| (%) | 8.5 | 6.4 | 5.3 | 3.9 | 6.4 | 5.7 | 3.4 |
| Light transmittanc e (585 nm) | T₀ before ultraviolet irradiation (%) | 17.9 | 18.8 | 17.4 | 17.3 | 17.2 | 16.3 | 21.3 |
| | T₁ after ultraviolet irradiation for 1000 hours (%) | 63.5 | 65.3 | 60.9 | 57.4 | 54.9 | 60.5 | 63.0 |
| | Change rate \|T₁ - T₀\| (%) | 45.6 | 46.5 | 43.5 | 40.1 | 37.8 | 44.2 | 41.7 |
| Evaluation of weather fastness | | C | C | C | C | C | C | C |
| Light transmittanc e (700 nm) | T₀ before ultraviolet irradiation (%) | 87.7 | 87.7 | 86.6 | 86.2 | 87.3 | 87.0 | 87.3 |
| | T₁ after ultraviolet irradiation for 1000 hours (%) | 83.7 | 83.9 | 83.0 | 83.4 | 82.7 | 82.8 | 85.0 |
| | Change rate \|T₁ - T₀\| (%) | 4.0 | 3.7 | 3.6 | 2.8 | 4.6 | 4.3 | 2.3 |

As seen from Tables 2, 3, and 4, Examples 1 to 10 had good weather fastness as compared with Comparative Examples 1 to 7.

This application claims priority based on Japanese Patent Application No. 2022-200134 filed on December 15, 2022, the entire disclosure of which is incorporated herein.

### REFERENCE SIGNS LIST

- 10: laminated glass
- 11: laminated glass interlayer film
- 13: transparent plate-like member

## Claims

1. A resin composition for a laminated glass interlayer film comprising:
a resin (A);
a coloring agent (B); and
an ultraviolet absorber (C),
wherein the resin composition has, in a total light transmittance of laminated glass formed from the resin composition, which is measured by the following (method),
a transmission spectrum in which a light transmittance at a wavelength of 400 nm is 65% or less,
a wavelength at which the light transmittance is minimized in a wavelength range of 420 nm or more and 720 nm or less is 570 nm or more and 605 nm or less, and
a light transmittance at a wavelength at which the light transmittance is minimized in a wavelength range of 570 nm or more and 605 nm or less is 1% or more and 50% or less,
(method)
a laminated glass interlayer film having a thickness of 1.6 mm and formed from the resin composition is obtained, next, the obtained laminated glass interlayer film is interposed between glass plates having a thickness of 3.2 mm to have a layer configuration of glass plate/laminated glass interlayer film/glass plate, and the laminate is retained in a vacuum at 140°C for 10 minutes using a vacuum laminator, and then pressed at 0.1 MPa (gauge pressure) for 10 minutes to obtain a laminated glass, next, a total light transmittance of the obtained laminated glass is measured with a haze meter in accordance with JIS K 7136: 2000, and a light transmittance at a wavelength of 400 nm and a wavelength at which the light transmittance is minimized in a wavelength range of 420 nm or more and 720 nm or less are read.

2. The resin composition according to Claim 1,
wherein the light transmittance at a wavelength of 400 nm is 1% or more.

3. The resin composition according to Claim 1 or 2,
wherein the coloring agent (B) has a maximum absorption wavelength in a wavelength range of 570 nm or more and 605 nm or less.

4. The resin composition according to any one of Claims 1 to 3,
wherein the coloring agent (B) includes at least one selected from the group consisting of a tetraazaporphyrin compound and an azo compound.

5. The resin composition according to any one of Claims 1 to 4,
wherein the coloring agent (B) includes a tetraazaporphyrin compound.

6. The resin composition according to any one of Claims 1 to 5,
wherein a content of the coloring agent (B) is 1 ppm or more and 500 ppm or less with respect to a total amount of the resin composition.

7. The resin composition according to any one of Claims 1 to 6,
wherein the ultraviolet absorber (C) has a maximum absorption wavelength in a wavelength range of 300 nm or more and 400 nm or less.

8. The resin composition according to any one of Claims 1 to 7,
wherein the ultraviolet absorber (C) includes an ultraviolet absorber (C1) having a triazine skeleton.

9. The resin composition according to Claim 8,
wherein a content of the ultraviolet absorber (C1) having a triazine skeleton is 0.01% by mass or more and 2.0% by mass or less when a total amount of the resin composition is 100% by mass.

10. The resin composition according to any one of Claims 1 to 9,
wherein a content of the ultraviolet absorber (C) is 0.01% by mass or more and 5.0% by mass or less when a total amount of the resin composition is 100% by mass.

11. The resin composition according to any one of Claims 1 to 10, further comprising:
a silane coupling agent (F).

12. The resin composition according to any one of Claims 1 to 11,
wherein the resin (A) includes at least one selected from the group consisting of an ethylene-vinyl ester copolymer, an ethylene-α-olefin copolymer, an ethylene-unsaturated carboxylic acid-based copolymer, an ionomer of an ethylene-unsaturated carboxylic acid-based copolymer, an ethylene-unsaturated carboxylic acid ester copolymer, polyvinyl butyral, a thermoplastic polyurethane, and a silicone resin.

13. The resin composition according to any one of Claims 1 to 12,
wherein the resin (A) includes an ionomer of an ethylene-unsaturated carboxylic acid-based copolymer.

14. The resin composition according to Claim 13,
wherein a metal ion constituting the ionomer of the ethylene-unsaturated carboxylic acid-based copolymer includes one or two or more selected from the group consisting of a sodium ion, a magnesium ion, and a zinc ion.

15. The resin composition according to any one of Claims 1 to 14,
wherein a total content of the resin (A), the coloring agent (B), and the ultraviolet absorber (C) is 50% by mass or more and 100% by mass or less when a total amount of the resin composition is 100% by mass.

16. A laminated glass interlayer film comprising:
a layer formed from the resin composition according to any one of Claims 1 to 15.

17. The laminated glass interlayer film according to Claim 16,
wherein the laminated glass interlayer film has a multilayer structure including at least one layer formed from the resin composition.

18. A laminated glass comprising:
the laminated glass interlayer film according to Claim 16 or 17; and
a transparent plate-like member that is provided on at least one surface of the laminated glass interlayer film.
